(19) Europäisches Patentamt
European Patent Office
Office européen des brevets

(11) **EP 3 235 842 B2**

(12) **NEW EUROPEAN PATENT SPECIFICATION**
After opposition procedure

(45) Date of publication and mention of the opposition decision:
**11.10.2023 Bulletin 2023/41**

(45) Mention of the grant of the patent:
**20.01.2021 Bulletin 2021/03**

(21) Application number: **15869976.9**

(22) Date of filing: **15.12.2015**

(51) International Patent Classification (IPC):
***C08G 18/10*** *(2006.01)* ***C08G 18/73*** *(2006.01)*
***C09D 175/04*** *(2006.01)* ***C08K 5/524*** *(2006.01)*
***C08G 18/12*** *(2006.01)* ***C08G 18/48*** *(2006.01)*
***C08G 18/61*** *(2006.01)* ***C08G 18/62*** *(2006.01)*
***C08G 18/78*** *(2006.01)* ***C08G 18/79*** *(2006.01)*
***C08G 18/18*** *(2006.01)* ***C08G 18/24*** *(2006.01)*
***C08G 18/28*** *(2006.01)* ***C08G 18/32*** *(2006.01)*
***C08G 18/44*** *(2006.01)*

(52) Cooperative Patent Classification (CPC):
**C08G 18/10; C08G 18/12; C08G 18/1875; C08G 18/246; C08G 18/282; C08G 18/2825; C08G 18/283; C08G 18/3203; C08G 18/3206; C08G 18/44; C08G 18/4825; C08G 18/485; C08G 18/4854; C08G 18/61; C08G 18/6229;**

(Cont.)

(86) International application number:
**PCT/JP2015/085078**

(87) International publication number:
**WO 2016/098771 (23.06.2016 Gazette 2016/25)**

(54) **SELF-REPAIRING POLYURETHANE RESIN MATERIAL, SELF-REPAIRING POLYURETHANE RESIN, SELF-REPAIRING COATING MATERIAL, SELF-REPAIRING ELASTOMER MATERIAL, METHOD FOR PRODUCING SELF-REPAIRING POLYURETHANE RESIN MATERIAL, AND METHOD FOR PRODUCING SELF-REPAIRING POLYURETHANE RESIN**

SELBSTREPARIERENDES POLYURETHANHARZMATERIAL, SELBSTREPARIERENDES POLYURETHANHARZ, SELBSTREPARIERENDES BESCHICHTUNGSMATERIAL, SELBSTREPARIERENDES ELASTOMERES MATERIAL, HERSTELLUNGSVERFAHREN FÜR SELBSTREPARIERENDES POLYURETHANHARZMATERIAL UND HERSTELLUNGSVERFAHREN FÜR SELBSTREPARIERENDES POLYURETHANHARZ

MATIÈRE À BASE DE RÉSINE DE POLYURÉTHANE CAPABLE D’AUTO-RÉPARATION, RÉSINE DE POLYURÉTHANE CAPABLE D’AUTO-RÉPARATION, MATÉRIAU DE REVÊTEMENT CAPABLE D’AUTO-RÉPARATION, MATÉRIAU ÉLASTOMÈRE CAPABLE D’AUTO-RÉPARATION, PROCÉDÉ DE PRODUCTION DE MATIÈRE À BASE DE RÉSINE DE POLYURÉTHANE CAPABLE D’AUTO-RÉPARATION ET PROCÉDÉ DE PRODUCTION DE RÉSINE DE POLYURÉTHANE CAPABLE D’AUTO-RÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2014 JP 2014253242**

(43) Date of publication of application:
**25.10.2017 Bulletin 2017/43**

(73) Proprietor: **Mitsui Chemicals, Inc.**
**Tokyo 104-0028 (JP)**

(72) Inventors:
- **NAKAGAWA, Toshihiko**
  **Sodegaura-shi**
  **Chiba 299-0265 (JP)**
- **KANNO, Takashi**
  **Sodegaura-shi**
  **Chiba 299-0265 (JP)**
- **MORITA, Hirokazu**
  **Sodegaura-shi**
  **Chiba 299-0265 (JP)**

• **YAMASAKI, Satoshi**
**Sodegaura-shi**
**Chiba 299-0265 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 684 867** **JP-A- H06 100 648**
**JP-A- 2010 095 606** **JP-A- 2010 265 364**
**JP-A- 2010 280 883** **JP-A- 2011 105 886**
**JP-A- 2012 107 101** **JP-A- 2012 107 101**
**JP-A- 2012 121 984** **JP-A- 2013 060 542**
**JP-A- 2014 084 342** **JP-A- 2014 091 809**
**JP-A- 2015 003 945** **JP-B2- 5 270 446**
**JP-B2- 5 270 446**

• **YOSHIE, Naoko: "High Polymer as Sustainable Material", Journal of Institute of Industrial Science, pages 501-510,**

(52) Cooperative Patent Classification (CPC): (Cont.)
**C08G 18/73; C08G 18/7837; C08G 18/792; C08K 5/524; C09D 175/04**

## Description

TECHNICAL FIELD

The present invention relates to a self-repairing polyurethane resin material, a self-repairing polyurethane resin, a self-repairing coating material, a self-repairing elastomer material, a method for producing a self-repairing polyurethane resin material, and a method for producing a self-repairing polyurethane resin.

BACKGROUND ART

Conventionally, plastics are excellent in processability, and therefore are used widely in various industrial fields. Meanwhile, plastics have low hardness compared with glasses and metals, and therefore have disadvantages: damages such as abrasions are easily caused on the surfaces.

Thus, it has been proposed to protect plastics by forming a coating with excellent abrasion resistance on the surface of the plastic. Furthermore, it has been proposed to form a coating with excellent abrasion resistance also on the surfaces of glasses and metals having relatively high hardness, not only to plastics.

For the method for forming such a coating, to be specific, it has been widely known to form a coating with a relatively high hardness by increasing the crosslink density (hard coating treatment).

However, the coating formed by the hard coating treatment has excellent abrasion resistance but tends to have brittleness because of its relatively high hardness. Therefore, once it is damaged, cracks may be caused from the damaged portion, and furthermore, damages such as dents and depressions may not be prevented.

Recently, for such a coating, forming a coating (soft coating treatment) having a function to absorb external forces and repair damages (that is, self-repairing properties) has been variously examined.

To be more specific, it has been known that surfaces of, for example, exterior plates of automobiles and various plastic products are coated with a coating including polyurethane resin with self-repairing properties, and for such a coating composition, Patent Document 1 below has proposed, for example, a self-repairing formable coating composition containing (A) acrylic resin having a glass transition temperature of -20 to 30°C and a hydroxyl number of 40 to 100mgKOH/g, (B) polyisocyanate produced by reaction of aliphatic organic diisocyanate (to be specific, hexamethylenediisocyanate) and polycarbonate diol having a number average molecular weight of 250 to 750, and (C) an additive including polydimethylsiloxane having at least one hydroxyl group.

When a coating film is formed with such a coating agent, even when damages are caused on, for example, film surfaces, the damages are self-repaired with time.

JP 5270446 B2 describes a polyisocyanate composition having an isocyanate group concentration of 17 to 22 mass% that is prepared by the reaction of pentamethylene diisocyanate with a low molecular weight polyol having an average number of functional groups of 2 to 3.9.

Citation List

Patent Document

Patent Document 1: Japanese Unexamined Patent Publication No. 2012-107101

SUMMARY OF THE INVENTION

PROBLEM TO BE SOLVED BY THE INVENTION

Meanwhile, for the coating film, chemical resistance properties in addition to the self-repairing properties are required depending on application. However, the inventors of the present invention have examined and found that the coating film formed by the self-repairing formable coating composition of the above-described Patent Document 1 has insufficient chemical resistance properties.

Thus, an object of the present invention is to provide a self-repairing polyurethane resin material that allows for production of polyurethane resin with excellent self-repairing and chemical resistance properties, a self-repairing polyurethane resin produced by using the self-repairing polyurethane resin material, furthermore, a self-repairing coating material made of the self-repairing polyurethane resin, a self-repairing elastomer material made of the self-repairing polyurethane resin, a method for producing a self-repairing polyurethane resin material, and a method for producing a self-repairing polyurethane resin.

MEANS FOR SOLVING THE PROBLEM

The present invention [1] includes a self-repairing polyurethane resin material used for producing polyurethane resin having self-repairing properties,

wherein the self-repairing polyurethane resin material has an isocyanate group at its molecular terminal,
the self-repairing polyurethane resin material is produced by reaction of pentamethylenediisocyanate and an active hydrogen group-containing compound, and
the active hydrogen group-containing compound contains a polyol compound having a number average molecular weight of 100 to 2000 and an average functionality of 2 to 3, the polyol compound includes a carbonate group and/or an ester group, and the polyol compound contains a bifunctional polyol compound and a trifunctional polyol compound.

The present invention [2] includes the self-repairing polyurethane resin material of the above-described [1], wherein the active hydrogen group-containing compound contains 50 mass% or more of a polyol compound having a number average molecular weight of 250 to 1000 and an average functionality of 2 to 3 relative to a total amount of the active hydrogen group-containing compound.
The present invention [3] includes the self-repairing polyurethane resin material of the above-described [1], wherein the mole ratio of the bifunctional polyol compound relative to the trifunctional polyol compound is 1 to 50.
The present invention [4] includes the self-repairing polyurethane resin material of any one of the above-described [1] to [3] wherein the average functionality of the isocyanate group is 3.5 to 6.
The present invention [5] includes the self-repairing polyurethane resin material of any one of the above-described [1] to [4] wherein an allophanate group and an isocyanate trimer are contained, and the mole ratio of the allophanate group relative to the isocyanate trimer is 0.1 to 20.
The present invention [6] includes the self-repairing polyurethane resin material of any one of the above-described [1] to [5] wherein the isocyanate trimer is contained, and the isocyanate trimer content relative to a total amount of the self-repairing polyurethane resin material is 3 to 50 mass%.
The present invention [7] includes the self-repairing polyurethane resin material of any one of the above-described [1] to [6] wherein a ratio of a peak area for the number average molecular weight of 1000 or more relative to a total peak area measured by gel permeation chromatography (GPC) is 25 to 80 mass%.
The present invention [8] includes a self-repairing polyurethane resin produced by allowing the self-repairing polyurethane resin material of any one of the above-described [1] to [7] to react with an active hydrogen group-containing compound.
The present invention [9] includes a self-repairing coating material made of the self-repairing polyurethane resin of the above-described [8].
The present invention [10] includes a self-repairing elastomer material made of the self-repairing polyurethane resin of the above-described [8].
The present invention [11] includes a method for producing a self-repairing polyurethane resin material, wherein the self-repairing polyurethane resin material has an isocyanate group at its molecular terminal, and pentamethylenediisocyanate is allowed to react with an active hydrogen group-containing compound containing a polyol compound including a carbonate group and/or an ester group and having a number average molecular weight of 100 to 2000 and an average functionality of 2 to 3, and the polyol compound contains a bifunctional polyol compound and a trifunctional polyol compound.
The present invention [12] includes a method for producing a self-repairing polyurethane resin, wherein the self-repairing polyurethane resin material of any one of the above-described [1] to [8] is allowed to react with an active hydrogen group-containing compound.

Effects of the Invention

With the self-repairing polyurethane resin material of the present invention, a self-repairing polyurethane resin with excellent self-repairing and chemical resistance properties can be produced. The self-repairing polyurethane resin material is suitably produced by the method for producing a self-repairing polyurethane resin material of the present invention.
Therefore, the self-repairing polyurethane resin, self-repairing coating material, and self-repairing elastomer material of the present invention are excellent in self-repairing and chemical resistance properties. The self-repairing polyurethane resin is suitably produced by the method for producing a self-repairing polyurethane resin of the present invention.

DESCRIPTION OF EMBODIMENTS

The self-repairing polyurethane resin material of the present invention (polyurethane resin (described later) material with self-repairing properties) is used for producing a self-repairing polyurethane resin (polyurethane resin (described later) with self-repairing properties), is a material having an isocyanate group at its molecular terminal, and is produced by reaction of pentamethylenediisocyanate with an active hydrogen group-containing compound.

The self-repairing properties are functions of absorbing external force and repairing damages. For example, the self-repairing properties are, in the evaluation of <self-repairing 1> in Examples to be described later, characteristics of a gloss retention of 90% or more, and in the evaluation of <self-repairing 2> in Examples to be described later, the self-repairing properties are characteristics of a value of (100-compression set) of more than 99.0%.

Examples of the pentamethylenediisocyanate include 1,5-pentamethylenediisocyanate, 1,4-pentamethylenediisocyanate, 1,3-pentamethylenediisocyanate, and a mixture thereof, and preferably 1 ,5-pentamethylenediisocyanate is used.

The pentamethylenediisocyanate can be obtained as, for example, a commercially available product, and can be obtained by a known method, for example, by producing pentamethylenediamine or its salt by a biochemical method, and the pentamethylenediamine or its salt is subjected to isocyanate reaction by methods such as phosgenation method and carbamation method.

The active hydrogen group-containing compound is an organic compound having an active hydrogen group (hydroxyl group, amino group), and to be specific, a polyol compound containing a bifunctional polyol compound and a trifunctional polyol compound is employed.

In the present invention, the active hydrogen group-containing compound contains a polyol compound having a number average molecular weight of 100 to 2000 and an average functionality of 2 to 3 as an essential component. Such a polyol compound is described in detail below.

The polyol compound is an organic compound having two or more hydroxyl groups, and for example, a low-molecular-weight polyol and a high-molecular weight polyol are used.

The low-molecular-weight polyol is a compound having two or more hydroxyl groups and a number average molecular weight of 40 or more and less than 250, and examples thereof include dihydric alcohols such as ethylene glycol, propylene glycol, 1,3-propanediol, 1,4-butanediol, 1,3-butanediol, 1,2-butanediol, 1,5-pentanediol, 1,6-hexanediol, neopentyl glycol, 3-methyl-1,5-pentanediol, 2,2,2-trimethylpentanediol, 3,3-dimethylolheptane, alkane (C 7 to 20) diol, 1,3- or 1,4-cyclohexanedimethanol, and a mixture thereof, 1,3- or 1,4-cyclohexanediol, and a mixture thereof, hydrogenated bisphenol A, 1,4-dihydroxy-2-butene, 2,6-dimethyl-1-octene-3,8-diol, bisphenol A, diethylene glycol, triethylene glycol, dipropylene glycol, and isosorbide; trihydric alcohols such as glycerin, trimethylolpropane, and triisopropanolamine; tetrahydric alcohols such as tetramethylolmethane (pentaerythritol) and diglycerin; pentahydric alcohols such as xylitol; hexahydric alcohols such as sorbitol, mannitol, allitol, iditol, dulcitol, altritol, inositol, and dipentaerythritol; heptahydric alcohols such as perseitol; and octahydric alcohols such as sucrose.

These low-molecular-weight polyols may be used singly or in a combination of two or more.

The high-molecular weight polyol is a compound having two or more hydroxyl groups and a number average molecular weight of 250 or more, preferably 400 or more and 5000 or less, and a preferable upper limit value is preferably 2000, more preferably 1000, and examples thereof include polyetherpolyol, polyesterpolyol, polycarbonatepolyol, polyurethane polyol, epoxypolyol, vegetable oil polyol, polyolefinpolyol, acrylic polyol, and vinyl monomer-modified polyol.

Examples of the polyetherpolyol include polyalkylene (C2 to 3) polyol and polytetramethylene ether polyol.

For the polyalkylene (C2 to 3) polyol, for example, an addition polymer (including random and/or block copolymer of two or more alkylene oxides) of alkylene oxides such as ethylene oxide, propyleneoxide, and trimethyleneoxide, using the above-described low-molecular-weight polyol (dihydric alcohol, trihydric alcohol) or a known polyamine component as an initiator, is used.

The functionality of the polyalkylene (C2 to 3) polyol is in correspondence with the functionality of the initiator. For example, when dihydric alcohol is used as the initiator, polyalkylene (C2 to 3) diol with functionality of 2 (that is, bifunctional polyol compound) is obtained, and when trihydric alcohol is used as the initiator, polyalkylene (C2 to 3) triol with functionality of 3 (that is, trifunctional polyol compound) is obtained.

Examples of the polyalkylene (C2 to 3) polyol include, to be more specific, polyethylene glycol, polypropylene glycol, ethylene oxide-propyleneoxide copolymer (random and/or block copolymer), and polytrimethyleneetherglycol.

Examples of the polytetramethylene ether polyol include polytetramethylene ether glycol, and to be specific, for example, a ring-opening polymerized product produced by cationic polymerization of tetrahydrofuran, and noncrystalline polytetramethylene ether glycol obtained by copolymerizing polymerization unit of tetrahydrofuran and the above-described low-molecular-weight polyol.

Examples of the polyetherpolyol include plants derived polyetherpolyol, to be specific, plants derived polyalkylene (C2 to 3) polyol produced by using plants derived low-molecular-weight polyol such as 1,3-propanediol, 1,4-butanediol, 1,3-butanediol, isosorbide, glycerin, sorbitol, and sucrose as an initiator; and plants derived polytetramethylene ether glycol produced by ring-opening polymerization of tetrahydrofuran in which furfural derived from plants derived material such as com is used.

For such a plants derived polyetherpolyol, a commercially available product can be used, and for example, PTG 2000SN (P)(polytetramethylene ether glycol using biomass material, manufactured by Hodogaya Chemical Co., LTD., number average molecular weight 2000), and PTG 1000SN (P)(polytetramethylene ether glycol using biomass material, manufactured by Hodogaya Chemical Co., LTD., number average molecular weight 1000) are used.

Examples of the plants derived polyetherpolyol further include polytrimethyleneetherpolyol produced by subjecting plants derived 1,3-propanediol produced through fermentation process of plants such as corn to polycondensation.

Such plant-derived polyether polyols can be obtained as commercially available products as well, and examples thereof include selenol H1000 (polytrimethylene ether polyol in which biomass material is used, Dupont, number average molecular weight 1000), and selenol H2000 (polytrimethylene ether polyol in which biomass material is used, Dupont, number average molecular weight 2000).

Examples of the polyester polyol include a polycondensation product obtained by allowing the above-described low-molecular-weight polyol and polybasic acid to react under known conditions.

Examples of the polybasic acid include saturated aliphatic dicarboxylic acids such as oxalic acid, malonic acid, succinic acid, methylsuccinic acid, glutaric acid, adipic acid, 1,1-dimethyl-1,3-dicarboxypropane, 3-methyl-3-ethylglutaric acid, azelaic acid, sebacic acid, saturated aliphatic dicarboxylic acids (C11 to 13) unsaturated aliphatic dicarboxylic acids such as maleic acid, fumaric acid, itaconic acid, aromatic dicarboxylic acids such as orthophthalic acid, isophthalic acid, terephthalic acid, toluenedicarboxylic acid, naphthalenedicarboxylic acid, alicyclic dicarboxylic acids such as hexahydrophthalic acid, other carboxylic acids such as dimer acid, hydrogenated dimer acid, het acid, and acid anhydrides derived from these carboxylic acids such as oxalic anhydride, succinic anhydride, maleic anhydride, phthalic anhydride, 2-alkyl (C12 to C 18) succinic anhydride, tetrahydrophthalic anhydride, trimellitic anhydride, and hallides derived from carboxylic acids thereof such as oxalyl dichloride, adipoyl dichloride, and sebacoyl dichloride.

Examples of the polyester polyol include plant derived polyester polyol, to be specific, vegetable oil polyester polyols obtained by condensation reaction of hydroxycarboxylic acid such as hydroxyl group-containing vegetable oil fatty acid (e.g., castor oil fatty acid containing ricinoleic acid, hydrogenated castor oil fatty acid containing 12-hydroxystearic acid) using the above-described low-molecular-weight polyol as an initiator under known conditions.

Examples of the polyester polyol include polycaprolactone polyol (polycaprolactonediol, polycaprolactonetriol) and polyvalerolactone polyol obtained by ring-opening polymerization of lactones such as ε-caprolactone, γ-valerolactone, and lactides such as L-lactide and D-lactide using the above-described low-molecular-weight polyols as an initiator; and further lactone-based polyester polyols obtained by copolymerizing such a polycaprolactone polyol or polyvalerolactone polyol with the above-described dihydric alcohol.

The functionality of polyesterpolyol is in correspondence with the functionality of the low-molecular-weight polyol that is used as a material in condensation reaction. For example, when dihydric alcohol is used as a material in the condensation reaction, polyesterdiol (that is, bifunctional polyol compound) having a functionality of two is obtained, and when trihydric alcohol is used as a material in the condensation reaction, polyestertriol (that is, trifunctional polyol compound) having a functionality of three is produced.

Examples of the polycarbonate polyol include a ring-opening polymerization product of ethylene carbonate using the above-mentioned low-molecular-weight polyol as an initiator; and a product of reaction between dihydric alcohol and a low-molecular-weight carbonate having a molecular weight of 40 or more and less than 400.

Examples of the dihydric alcohol include ethylene glycol, 1,2-propanediol, 1,3-propanediol, 1,2-butanediol, 1,3-butanediol, 1,4-butanediol, 1,5-pentanediol, 3-methyl-1,5-pentanediol, 1,6-hexanediol, 1,8-octanediol, 1,9-nonanediol, diethylene glycol, neopentyl glycol, dipropylene glycol, 1,4-cyclohexanediol, and 1,4-cyclohexanedimethanol.

These dihydric alcohols may be used singly or in a combination of two or more.

Examples of the low-molecular-weight carbonate include dialkylcarbonate, alkylenecarbonate, and diarylcarbonate.

Examples of the dialkylcarbonate include dimethylcarbonate and diethylcarbonate.

Examples of the alkylenecarbonate include ethylenecarbonate, propylenecarbonate, trimethylenecarbonate, tetramethylenecarbonate, and hexamethylenecarbonate.

Examples of the diarylcarbonate include diphenylcarbonate, dinaphthylcarbonate, dianthrylcarbonate, diphenanthrylcarbonate, diindanylcarbonate, and tetrahydronaphthylcarbonate.

These low-molecular-weight carbonates may be used singly or in a combination of two or more.

Those polycarbonate polyols of a compound having a carbonate bond in its molecule and having a hydroxyl group in its terminal will suffice, and the compound may have an ester linkage along with the carbonate bond.

Examples of the polycarbonate polyol include plant derived polycarbonate polyols, to be specific, alicyclic dihydroxy compounds such as isosorbide derived from glucose, a plant derived material, and polycarbonate polyol produced by transesterification of the above-described low molecular-weight polyol with diphenyl carbonate.

The functionality of polycarbonatepolyol is in correspondence with the functionality of the initiator. When dihydric alcohol is used as the initiator, polycarbonatediol (that is, bifunctional polyol compound) having a functionality of two is obtained, and when trihydric alcohol is used as the initiator, polycarbonatetriol (that is, trifunctional polyol compound) having a functionality of three is produced.

Polyurethane polyols can be obtained as polyester polyurethane polyol, polyether polyurethane polyol, polycarbonate polyurethane polyol, or polyester polyether polyurethane polyol, by allowing polyester polyol, polyether polyol and/or polycarbonate polyol obtained as described above to react with polyisocyanate at an equivalent ratio (OH/NCO) of hydroxyl group (OH) to isocyanate group (NCO) of more than 1.

Examples of the epoxy polyol include epoxy polyol obtained by a reaction between the above-mentioned low-molecular-weight polyol and a polyfunctional halohydrin such as epichlorohydrin and β-methyl epichlorohydrin.

Examples of the vegetable oil polyol include vegetable derived oil polyol, to be more specific, examples thereof include hydroxyl group-containing vegetable oils such as castor oil and coconut oil. Examples thereof include ester-modified castor oil polyol obtained by reaction of castor oil polyol or castor oil fatty acid with polypropylene polyol.

Examples of the polyolefin polyol include polybutadiene polyol and partially saponified ethylene-vinylacetate copolymer.

Examples of the acrylic polyol include copolymers obtained by copolymerizing hydroxyl group-containing (meth)acrylate with a copolymerizable vinyl monomer copolymerizable with the hydroxyl group-containing (meth)acrylate.

Examples of the hydroxyl group-containing (meth)acrylate include hydroxyalkyl (meth)acrylates such as hydroxyethyl (meth)acrylate, hydroxypropyl (meth)acrylate, hydroxybutyl (meth)acrylate, and 2,2-dihydroxymethylbutyl (meth)acrylate; polyhydroxyalkylmaleate; and polyhydroxyalkylfumarate.

Examples of the hydroxyl group-containing (meth)acrylate further include ε-caprolactone adduct of hydroxyalkyl (meth)acrylate, and preferably, ε-caprolactone adduct of hydroxyethyl (meth)acrylate is used.

For the ε-caprolactone adduct of hydroxyethyl (meth)acrylate, a commercially available product can be used, and to be specific, for example, PLACCEL FM1, PLACCEL FM1D, PLACCEL FM2D, PLACCEL FM3, PLACCEL FM3X, PLACCEL FM4, PLACCEL FM5, PLACCEL FA1, PLACCEL FA1DDM, PLACCEL FA2D, PLACCEL FA5, and PLACCEL FA10L (all manufactured by Daicel Corporation. trade name) are used.

For the hydroxyl group-containing (meth)acrylate, preferably, 2-hydroxyethyl (meth)acrylate is used.

Examples of the copolymerizable vinyl monomer include alkyl (meth)acrylate (having 1 to 16 carbon atoms) such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, isononyl (meth)acrylate, isobornyl (meth)acrylate, 2-ethylhexyl (meth)acrylate, decyl (meth)acrylate, isodecyl (meth)acrylate), lauryl (meth)acrylate, and cyclohexylacrylate; aromatic vinyls such as styrene, vinyltoluene, and α-methylstyrene; vinyl cyanide such as (meth)acrylonitrile; vinyl monomers having a carboxyl group such as (meth)acrylic acid, fumaric acid, maleic acid, and itaconic acid, or alkylester thereof; alkane polyol poly (meth)acrylate such as ethylene glycol di(meth)acrylate, butyleneglycol di(meth)acrylate, hexanediol di(meth)acrylate, oligoethylene glycol di(meth)acrylate, trimethylolpropane di(meth)acrylate, and trimethylolpropane tri(meth)acrylate; and vinyl monomers containing isocyanate groups such as 3-(2-isocyanate-2-propyl)-α-methylstyrene.

The acrylic polyol can be obtained by copolymerizing these hydroxyl group-containing (meth)acrylates and copolymerizable vinyl monomers in the presence of a suitable solvent and a suitable polymerization initiator.

Examples of the acrylic polyol include silicone polyol and fluorine polyol.

Examples of the silicone polyol include acrylic polyol in which, as a copolymerizable vinyl monomer, a silicone compound containing a vinyl group such as for example, γ-methacryloxypropyltrimethoxysilane is blended in the above-described copolymerization of acrylic polyol, and polysiloxanes (poly di C1-6 alkylsiloxane such as polydimethylsiloxane) having molecule ends modified with alcohol.

Examples of the fluorine-containing polyol include acrylic polyol in which, as a copolymerizable vinyl monomer, a fluorine-containing compound containing a vinyl group such as tetrafluoroethylene or chlorotrifluoroethylene is blended in the copolymerization of the acrylic polyol.

The vinyl monomer-modified polyol can be obtained by a reaction between the above-mentioned high-molecular-weight polyol and a vinyl monomer.

For the high-molecular weight polyol, preferably, polyetherpolyol (high-molecular weight polyol containing an ether group), polyesterpolyol (high-molecular weight polyol containing an ester group), polycarbonatepolyol (high-molecular weight polyol containing a carbonate group), and polyurethane polyol (high-molecular weight polyol having a urethane group) are used.

These high-molecular weight polyols may be used singly or in a combination of two or more.

These polyol compounds may be used singly or in a combination of two or more.

As described above, the active hydrogen group-containing compound contains, in view of improvement in self-repairing and chemical resistance properties, a polyol compound having a number average molecular weight of 100 to 2000 and an average functionality of 2 to 3 as an essential component.

That is, the active hydrogen group-containing compound contains a polyol compound having a number average molecular weight of 100 or more, preferably number average molecular weight of 250 or more, even more preferably a number average molecular weight of 500 or more, and a number average molecular weight of 2000 or less, preferably a number average molecular weight of 1000 or less, and having an average functionality of 2 to 3.

The active hydrogen group-containing compound preferably contains 50 mass% or more of a polyol compound having a number average molecular weight of 250 to 1000 and an average functionality of 2 to 3 relative to a total amount of the active hydrogen group-containing compound.

That is, the active hydrogen group-containing compound contains preferably 50 mass% or more, more preferably 80 mass% or more, particularly preferably 100 mass% of the high-molecular weight polyol relative to a total amount of the active hydrogen group-containing compound. That is, particularly preferably, the active hydrogen group-containing compound contains no low-molecular-weight polyol, but only contains the high-molecular weight polyol.

Use of such an active hydrogen group-containing compound in combination with the above-described pentamethylenediisocyanate allows for production of a self-repairing polyurethane resin with excellent self-repairing and chemical resistance properties.

For the polyol compound, in view of improvement in self-repairing and chemical resistance properties, a compound including a carbonate group and/or ester group is used.

That is, for the polyol compound, preferably, polyesterpolyol (high-molecular weight polyol containing an ester group), and polycarbonatepolyol (high-molecular weight polyol containing a carbonate group) are used, even more preferably, a combination of these is used.

The polyol compound contains, in view of improvement in self-repairing and chemical resistance properties, a bifunctional polyol compound and a trifunctional polyol compound.

Examples of the bifunctional polyol compound include a low-molecular-weight polyol having a functionality of two and a high-molecular weight polyol having a functionality of two.

Examples of the low-molecular-weight polyol having a functionality of two include the above-described dihydric alcohol.

Examples of the high-molecular weight polyol having a functionality of two include the above-described polyetherdiol, the above-described polyesterdiol, and the above-described polycarbonatediol.

For the bifunctional polyol compound, preferably, a high-molecular weight polyol having a functionality of two is used, and more preferably, polycarbonatediol is used.

For the trifunctional polyol compound, for example, a low-molecular-weight polyol having a functionality of three and a high-molecular weight polyol having a functionality of three are used.

For the low-molecular-weight polyol having a functionality of three, the above-described trihydric alcohol is used.

Examples of the high-molecular weight polyol having a functionality of three include the above-described polyethertriol, the above-described polyestertriol (polycaprolactonetriol) and the above-described polycarbonatetriol.

For the trifunctional polyol compound, preferably, a high-molecular weight polyol having a functionality of three is used, more preferably, polyestertriol is used, and particularly preferably, polycaprolactonetriol is used.

The mole ratio (OH equivalent ratio) of the bifunctional polyol compound relative to the trifunctional polyol compound is, for example, 0.5 or more, preferably 1 or more, more preferably 5 or more, and for example, 99 or less, preferably 50 or less.

When the mole ratio of the bifunctional polyol compound relative to the trifunctional polyol compound is within the above-described range, a self-repairing polyurethane resin with excellent self-repairing and chemical resistance properties can be produced.

The active hydrogen group-containing compound is not particularly limited as long as the polyol compound having a number average molecular weight of 100 to 2000 and an average functionality of 2 to 3 is contained as an essential component, and other components can be used in combination as long as the other components do not hinder the purpose of the present invention. The other component can be blended in an amount of, preferably 20 parts by mass or less, more preferably 5 parts by mass or less relative to 100 parts by mass of the polyol compound having a number average molecular weight of 100 to 2000 and an average functionality of 2 to 3.

To allow pentamethylenediisocyanate to react with the active hydrogen group-containing compound, for example, pentamethylenediisocyanate and the active hydrogen group-containing compound are blended and heated. In this manner, a compound having an isocyanate group at its molecular terminal is produced as a reaction product. At this time, pentamethylenediisocyanate and the active hydrogen group-containing compound are blended so that the isocyanate group in pentamethylenediisocyanate is excessive relative to the active hydrogen group in the active hydrogen group-containing compound. To be specific, the equivalent ratio (NCO/active hydrogen group) of the isocyanate group in pentamethylenediisocyanate relative to the active hydrogen group in the active hydrogen group-containing compound is, for example, 5 or more, preferably 15 or more, and for example, 1000 or less, preferably 100 or less, more preferably 50 or less, and particularly preferably 30 or less.

The active hydrogen group-containing compound relative to 100 parts by mass of pentamethylenediisocyanate is, for example, 1 part by mass or more, preferably 3 parts by mass or more, and for example, 130 parts by mass or less, preferably 33 parts by mass or less.

In this reaction, as necessary, a catalyst can be blended.

Examples of the catalyst include a urethanizing catalyst, a trimerization catalyst, and an allophanate-forming catalyst.

For example, in the reaction of pentamethylenediisocyanate and the active hydrogen group-containing compound, by blending a urethanizing catalyst, urethane modification of pentamethylenediisocyanate can be accelerated.

Examples of the urethanizing catalyst include amines and organic metal compounds.

Examples of amines include tertiary amines such as triethylamine, triethylenediamine, bis-(2-dimethylaminoethyl) ether, and N-methylmorpholine; quaternary ammonium salts such as tetraethyl hydroxyl ammonium; and imidazoles such as imidazole and 2-ethyl-4-methylimidazole.

Examples of organic metal compounds include organic tin compounds such as tin acetate, stannous octoate, stannous oleate, tin laurate, dibutyl tin diacetate, dimethyl tin dilaurate, dibutyl tin dilaurate, dibutyl tin dimercaptide, dibutyl tin maleate, dibutyl tin dilaurate, dibutyl tin dineodecanoate, dioctyl tin dimercaptide, dioctyl tin dilaurylate, and dibutyl tin dichloride; organic lead compounds such as lead octanoate and lead naphthenate; organic nickel compounds such as nickel naphthenate; organic cobalt compounds such as cobalt naphthenate; organic copper compounds such as copper octenate; organic bismuth compounds such as bismuth octylate and bismuth neodecanoate.

Examples of the urethanizing catalyst also include potassium salts such as potassium carbonate, potassium acetate, and potassium octylate.

These urethanizing catalysts may be used singly or in a combination of two or more.

For the urethanizing catalyst, preferably, an organic metal compound, more preferably, tin octylate is used.

The mixing ratio of the urethanizing catalyst relative to 100 parts by mass of the pentamethylenediisocyanate is, for example, 0.0005 parts by mass or more, preferably 0.001 parts by mass or more, and for example, 0.1 parts by mass or less, preferably 0.05 parts by mass or less.

The reaction conditions are as follows. The heating temperature is, for example, 25°C or more, preferably 40°C or more, and for example, 120°C or less, preferably 90°C or less. The heating time is, for example, 0.5 hours or more, preferably 1 hour or more, and for example, 5 hours or less, preferably 3 hours or less.

A self-repairing polyurethane resin material having an isocyanate group at its molecular terminal and containing a urethane group in its molecule is produced in this manner.

In this case, the urethane group content relative to a total amount of the self-repairing polyurethane resin material is, for example, 0.1 mol% or more, preferably 0.5 mol% or more, and for example, 50 mol% or less, preferably 30 mol% or less.

For example, in the reaction of pentamethylenediisocyanate and the active hydrogen group-containing compound, by blending the trimerization catalyst, pentamethylenediisocyanate can be subjected to trimer modification.

Examples of the isocyanate trimer include known trimers such as an isocyanurate group and an iminooxadiazinetrione group.

Examples of the trimerization catalyst include hydroxide of tetraalkylammonium or its organic salt of weak acid such as tetramethyl ammonium, tetraethyl ammonium, tetrabutyl ammonium, and trimethylbenzyl ammonium; hydroxide of trialkylhydroxyalkyl ammonium or its organic salt of weak acid such as trimethylhydroxypropyl ammonium, trimethylhydroxyethyl ammonium, triethylhydroxypropyl ammonium, and triethylhydroxyethyl ammonium; alkali metal salt of alkylcarboxylic acid such as acetic acid, caproic acid, octylic acid, and myristic acid; salts of metals such as tin, zinc, and lead of the above-described alkylcarboxylic acid; metal chelate compounds of β-diketone such as aluminum acetylacetone and lithium acetylacetone; Friedel-Crafts catalysts such as aluminum chloride and boron trifluoride; various organic metal compounds such as titaniumtetrabutyrate and tributyl antimony oxide; and aminosilyl group-containing compounds such as hexamethylsilazane.

To be specific, for example, Zwitter ionic hydroxyalkyl quarternary ammonium compounds are used, to be more specific, for example, N-(2-hydroxypropyl)-N,N,N-trimethylammonium-2-ethylhexanoate (also called: trimethyl-N-2-hydroxypropylammonium·2-ethylhexanoate), N,N-dimethyl-N-hydroxyethyl-N-2-hydroxypropylammonium·hexanoate, triethyl-N-2-hydroxypropylammonium·hexadecanoate, trimethyl-N-2-hydroxypropylammonium·phenylcarbonate, and trimethyl-N-2-hydroxypropylammonium·formate are used.

These trimerization catalysts may be used singly or in a combination of two or more.

For the trimerization catalyst, preferably, N-(2-hydroxypropyl)-N,N,N-trimethylammonium-2-ethylhexanoate is used.

These trimerization catalysts also work as an allophanate-forming catalyst.

That is, in the reaction of pentamethylenediisocyanate and the active hydrogen group-containing compound, by blending the trimerization catalyst (allophanate-forming catalyst), pentamethylenediisocyanate is trimer-modified, and also allophanate-modified.

To be more specific, in this method, for example, first, as described above, pentamethylenediisocyanate is blended at the above-described ratio and allowed to react with an active hydrogen group-containing compound.

The reaction conditions in the reaction between pentamethylenediisocyanate and the active hydrogen group-containing compound are as follows. The heating temperature is, for example, 25°C or more, preferably 40°C or more, and for example, 120°C or less, preferably 90°C or less. The heating time is, for example, 0.5 hours or more, preferably 1 hour or more, and for example, 5 hours or less, preferably 3 hours or less.

In this method, then, the reaction product produced as described above is heated in the presence of the trimerization catalyst (allophanate-forming catalyst) to be subjected to trimer-forming reaction and allophanate-forming reaction.

The mixing ratio of the trimerization catalyst (allophanate-forming catalyst) relative to 100 parts by mass of the pentamethylenediisocyanate is, for example, 0.0005 parts by mass or more, preferably 0.005 parts by mass or more, and for example, 0.2 parts by mass or less, preferably 0.05 parts by mass or less.

The reaction conditions are as follows. The heating temperature is, for example, 25°C or more, preferably 40°C or more, and for example, 140°C or less, preferably 120°C or less. The heating time is, for example, 5 minutes or more, preferably 10 minutes or more, and for example, 120 minutes or less, preferably 60 minutes or less.

A self-repairing polyurethane resin material having an isocyanate group at its molecular terminal and containing a urethane group in its molecule, and furthermore, containing an isocyanate trimer and an allophanate group can be produced in this manner.

The isocyanate trimer content is, in view of improvement in chemical resistance and self-repairing properties, relative to a total amount of the self-repairing polyurethane resin material, for example, 3 mass% or more, preferably 5 mass% or more, more preferably 10 mass% or more, even more preferably 15 mass% or more, for example, 60 mass% or less, preferably 50 mass% or less, more preferably 30 mass% or less, even more preferably 25 mass% or less.

The isocyanate trimer content can be measured in conformity with the method described in Examples to be described later.

The allophanate group content is, in view of improvement in chemical resistance and self-repairing properties, relative to a total amount of the self-repairing polyurethane resin material, for example, 5 mol% or more, preferably 20 mol% or more, for example, 90 mol% or less, preferably 70 mol% or less.

The allophanate group content can be measured in conformity with the method described in Examples to be described later.

In the self-repairing polyurethane resin material, the mole ratio of the allophanate group to the isocyanate trimer is, for example, 0.05 or more, preferably 0.1 or more, more preferably 0.5 or more, and for example, 20 or less, preferably 15 or less, more preferably 1 or less.

The mole ratio of the allophanate group relative to the isocyanate trimer can be measured in conformity with the method described in Examples to be described later.

Instead of the trimerization catalyst, an allophanate-forming catalyst (allophanate-forming catalyst having no trimer-forming activation) may be used.

Examples of the allophanate-forming catalyst include an organic metal compound.

Examples of the organic metal compound include carboxylic acid metal salt.

Examples of the carboxylic acid include octanoic acid, naphthenic acid, octylic acid, and neodecanoic acid. These carboxylic acids may be used singly or in a combination of two or more.

Examples of the metal include alkali metals such as lithium, sodium, and potassium; alkaline earth metals such as magnesium, calcium, and barium; transition metals such as manganese, iron, cobalt, nickel, copper, zinc, and zirconium; and other metals such as tin and lead. These metals may be used singly or in a combination of two or more.

Examples of the organic metal compound include, to be more specific, although partially overlaps with the above-described urethanizing catalyst, for example, lead octanoate, lead naphthenate, bismuth octylate, and bismuth neodecanoate.

These organic metal compounds may be used singly or in a combination of two or more.

In such a case, the reaction conditions in the reaction between pentamethylenediisocyanate and the active hydrogen group-containing compound are as follows. The heating temperature is, for example, 25°C or more, preferably 40°C or more, and for example, 120°C or less, preferably 90°C or less. The heating time is, for example, 0.5 hours or more, preferably 1 hour or more, and for example, 5 hours or less, preferably 3 hours or less.

The mixing ratio of the allophanate-forming catalyst relative to 100 parts by mass of the pentamethylenediisocyanate is, for example, 0.0005 parts by mass or more, preferably 0.001 parts by mass or more, and for example, 0.05 parts by mass or less, preferably 0.01 parts by mass or less.

The reaction conditions after blending the allophanate-forming catalyst are as follows. The heating temperature is, for example, 50°C or more, preferably 90°C or more, and for example, 125°C or less, preferably 110°C or less. The heating time is, for example, 2 hours or more, preferably 5 hours or more, and for example, 24 hours or less, preferably 20 hours or less.

A self-repairing polyurethane resin material having an isocyanate group at its molecular terminal and containing a urethane group in its molecule, and furthermore, containing no isocyanate trimer and containing the allophanate group at the above-described ratio can be produced in this manner.

Furthermore, a self-repairing polyurethane resin material containing an isocyanate trimer can also be obtained by, for example, subjecting pentamethylenediisocyanate to trimerization reaction in the presence of the above-described trimerization catalyst, and thereafter, allowing the obtained reaction product to react with an active hydrogen group-containing compound.

The mixing ratio of the trimerization catalyst (allophanate-forming catalyst) relative to 100 parts by mass of the pentamethylenediisocyanate is, for example, 0.0005 parts by mass or more, preferably 0.005 parts by mass or more, and for example, 0.2 parts by mass or less, preferably 0.05 parts by mass or less.

The reaction conditions are as follows. The heating temperature is, for example, 25°C or more, preferably 40°C or more, and for example, 140°C or less, preferably 120°C or less. The heating time is, for example, 5 minutes or more, preferably 10 minutes or more, and for example, 120 minutes or less, preferably 60 minutes or less.

The reaction conditions in the reaction between the produced reaction product and the active hydrogen group-containing compound are as follows. The heating temperature is, for example, 25°C or more, preferably 40°C or more, and for example, 120°C or less, preferably 90°C or less. The heating time is, for example, 0.5 hours or more, preferably 1 hour or more, and for example, 5 hours or less, preferably 3 hours or less.

A self-repairing polyurethane resin material having an isocyanate group at its molecular terminal and containing an isocyanate trimer and a urethane group can be produced in this manner.

The self-repairing polyurethane resin material may further contain, other than the above-described functional groups (urethane group, allophanate group, isocyanate trimer), a biuret group and a urea group.

For the self-repairing polyurethane resin material, in view of improvement in chemical resistance and self-repairing properties, preferably, an isocyanate trimer is contained, more preferably, an allophanate group and an isocyanate trimer are contained.

In the above-described reaction, organic phosphite such as the one described in, for example, Japanese Unexamined Patent Publication No. Sho 61-129173, can be blended as a promoter.

Examples of organic phosphites include organic diester phosphonate, and organic triester phosphonate, to be more specific, for example, monophosphites such as triethyl phosphite, tributyl phosphite, tris (2-ethylhexyl) phosphite, tridecyl phosphite, trilauryl phosphite, tris (tridecyl) phosphite, tristearyl phosphite, triphenyl phosphite, tris (nonylphenyl) phosphite, tris (2,4-di-t-butylphenyl) phosphite, diphenyldecyl phosphite, and diphenyl (tridecyl) phosphite; di, tri, or tetra phosphites derived from polyhydric alcohol such as distearyl·pentaerythrityl·diphosphite, di-dodecyl·pentaerythritol·diphosphite, di-tridecyl·pentaerythritol·diphosphite, dinonylphenyl·pentaerythritol·diphosphite, tetraphenyl·tetra·tridecyl·pentaerythrityl·tetra phosphite, tetraphenyl·dipropylene glycol·diphosphite, and tripentaerythritol·tri phosphite; and diphosphites derived from bisphenol compounds such as di-alkyl-bisphenol A diphosphite having 1 to 20 carbons, and 4,4'-butylidene-bis(3-methyl-6-t-butylphenyl-di-tridecyl) phosphite; poly phosphites such as hydrogenated bisphenol A phosphite polymers (molecular weight 2400 to 3000); and tris (2,3-dichloropropyl) phosphite.

In this reaction, a stabilizer including a hindered phenol antioxidant such as, for example, 2,6-di(tert-butyl)-4-methylphenol (also called: dibutylhydroxytoluene, hereinafter may be referred to as BHT), IRGANOX 1010, IRGANOX 1076, IRGANOX 1135, IRGANOX 245 (all manufactured by BASF Japan, trade name) can also be added.

In this reaction, as necessary, a known reaction solvent may be blended, and furthermore, at an arbitrary timing, a known catalyst deactivation agent (e.g., phosphoric acid, monochloroacetic acid, dodecylbenzenesulfonic acid, p-toluenesulfonic acid, benzoyl chloride,) can be added.

Then, after the termination of reaction, unreacted pentamethylene diisocyanate can be, as necessary, removed by a known removal method such as thin film distillation.

Furthermore, in this method, as necessary, after the above-described reaction, a compound containing a sulfonamide group can be blended.

Examples of the compound containing a sulfonamide group include aromatic sulfonamides and aliphatic sulfonamides.

Examples of aromatic sulfonamides include benzene sulfonamide, dimethylbenzene sulfonamide, sulfanilamide, o- and p-toluene sulfonamide, hydroxynaphthalene sulfonamide, naphthalene-1-sulfonamide, naphthalene-2-sulfonamide, m-nitrobenzene sulfonamide, and p-chlorobenzene sulfonamide.

Examples of aliphatic sulfonamides include methane sulfonamide, N,N-dimethylmethane sulfonamide, N,N-dimethylethane sulfonamide, N,N-diethylmethane sulfonamide, N-methoxymethane sulfonamide, N-dodecylmethane sulfonamide, N-cyclohexyl-1-butanesulfonamide, and 2-aminoethane sulfonamide.

These compounds containing a sulfonamide group may be used singly or in a combination of two or more.

For the compound containing a sulfonamide group, preferably, aromatic sulfonamides are used, more preferably, o- or p-toluenesulfonamides are used.

The compound containing a sulfonamide group is blended, for example, after completion of the above-described reaction, in the reaction solution. The compound containing a sulfonamide group can also be blended, as necessary, after removing unreacted pentamethylenediisocyanate (monomer) from the reaction solution, in the reaction solution.

The mixing ratio of the compound containing a sulfonamide group relative to 100 parts by mass of the pentamethylenediisocyanate is follows. The compound containing a sulfonamide group is 0.001 to 0.5 parts by mass, preferably 0.005 to 0.4 parts by mass, more preferably 0.01 to 0.3 parts by mass. That is, the compound containing a sulfonamide group relative to a total of pentamethylenediisocyanate is, for example, 10 to 5000 ppm, preferably 50 to 4000 ppm, more preferably 100 to 3000 ppm.

When the compound containing a sulfonamide group is contained at the above-described ratio, improvement in storage stability of the self-repairing polyurethane resin material can be improved.

In the self-repairing polyurethane resin material, for example, two or more self-repairing polyurethane resin materials can be mixed.

To be more specific, for example, a self-repairing polyurethane resin material obtained by using a bifunctional polyol compound and a self-repairing polyurethane resin material obtained by using a trifunctional polyol compound can be mixed by a known method and used.

In the thus produced self-repairing polyurethane resin material, the average functionality of the isocyanate group is, for example, 3.2 or more, preferably 3.5 or more, more preferably 3.7 or more, and for example, 6.5 or less, preferably 6 or less, more preferably 5.5 or less, particularly preferably 4.5 or less.

When the isocyanate group has an average functionality in the above-described range, a self-repairing polyurethane resin with excellent self-repairing and chemical resistance properties can be formed.

The average functionality can be determined in conformity with the method described in Examples described later.

The self-repairing polyurethane resin material has a number average molecular weight of, for example, 500 or more, preferably 700 or more, and for example, 2500 or less, preferably 1500 or less, more preferably 1300 or less.

The number average molecular weight can be determined in conformity with the method described in Examples described later.

In the self-repairing polyurethane resin material, the ratio of the number average molecular weight of 1000 or more measured by the gel permeation chromatography (GPC) relative to the entirety is, for example, 25 mass% or more, preferably 35 mass% or more, more preferably 50 mass% or more, and for example, 80 mass% or less, preferably 70 mass% or less, more preferably 60 mass% or less.

When the ratio of the number average molecular weight is within the above-described range, improvement in chemical resistance and self-repairing properties can be achieved.

The ratio of the number average molecular weight can be determined in conformity with the method described in Examples described later.

The thus produced self-repairing polyurethane resin material has an isocyanate group concentration of, for example, 10 mass% or more, preferably 12 mass% or more, more preferably 15 mass% or more, and for example, 24 mass% or less, preferably 23 mass% or less, more preferably 20 mass% or less.

In the thus produced self-repairing polyurethane resin material, the isocyanate monomer concentration (unreacted pentamethylenediisocyanate concentration) is, for example, 5 mass% or less, preferably 2 mass% or less, more preferably 1 mass% or less.

The self-repairing polyurethane resin material can be diluted, as necessary, with an organic solvent.

Examples of the organic solvent include ketones such as acetone, methyl ethyl ketone, methylisobutylketone, and cyclohexanone; nitriles such as acetonitrile; alkylesters such as methyl acetate, ethyl acetate, butyl acetate, and isobutyl acetate; aliphatic hydrocarbons such as n-hexane, n-heptane, and octane; alicyclic hydrocarbons such as cyclohexane and methylcyclohexane; aromatic hydrocarbons such as toluene, xylene, and ethylbenzene; glycolether esters such as methylcellosolveacetate, ethylcellosolveacetate, methylcarbitolacetate, ethylcarbitolacetate, ethylene glycolethylether acetate, propylene glycolmethylether acetate, 3-methyl-3-methoxybutylacetate, and ethyl-3-ethoxypropionate; ethers such as diethylether, tetrahydrofuran, and dioxane; halogenated aliphatic hydrocarbons such as methyl chloride, methylene chloride, chloroform, carbon tetrachloride, methyl bromide, methylene iodide, and dichloroethane; and polar aprotic solvents such as N-methylpyrrolidone, dimethylformamide, N,N'-dimethylacetamide, dimethyl sulfoxide, and hexamethylphosphonylamide.

Examples of organic solvents include nonpolar solvents (nonpolar organic solvent), and examples of nonpolar solvents include those nonpolar organic solvents having an aniline point of, for example, 10 to 70°C, preferably 12 to 65°C and having low toxicity and solvency, such as aliphatic, naphthene hydrocarbon organic solvent; and vegetable oils typically represented by turpentine oil.

The nonpolar organic solvents can be obtained from commercially available products, and examples of those commercially available products include petroleum hydrocarbon organic solvents such as Haws (manufactured by Shell Chemicals, aniline point 15°C), Swasol 310 (manufactured by Maruzen Petrochemical, aniline point 16°C), Esso Naphtha No. 6 (manufactured by Exxon Mobil Chemical, aniline point 43°C), Laws (manufactured by Shell Chemicals, aniline point 43°C), Esso Naphtha No. 5 (manufactured by Exxon Mobil Corporation, aniline point 55°C), and pegasol 3040 (manufactured by Exxon Mobil Corporation, aniline point 55°C); and also turpentine oils such as methylcyclohexane (aniline point 40°C), ethylcyclohexane (aniline point 44°C), and gum turpentine N (manufactured by YASUHARA CHEMICAL CO.,LTD., aniline point 27°C).

The self-repairing polyurethane resin material can be mixed with these organic solvents at an arbitrary ratio.

When the self-repairing polyurethane resin material is diluted with an organic solvent, the self-repairing polyurethane resin material concentration is, for example, 20 mass% or more, preferably 30 mass% or more, and for example, 95 mass% or less, preferably 90 mass% or less.

In such a case, the viscosity at 25°C is adjusted to be, for example, 10mPa·s or more, preferably 20mPa·s or more, and for example, 10000mPa·s or less, preferably 5000mPa·s or less.

Such a self-repairing polyurethane resin material is suitably produced by the above-described method for producing a self-repairing polyurethane resin material.

The self-repairing polyurethane resin material of the present invention can also be used as an aqueous self-repairing polyurethane resin material by allowing the self-repairing polyurethane resin material to react with a hydrophilic group-containing active hydrogen compound.

The hydrophilic group-containing active hydrogen compound is a compound having both of at least one hydrophilic group and at least one active hydrogen group, and examples of the hydrophilic group include an anionic group, a cationic group, and a nonionic group. Examples of the active hydrogen group include those groups that react with isocyanate groups, such as a hydroxyl group, an amino group, a carboxyl group, and an epoxy group.

Examples of the hydrophilic group-containing active hydrogen compound include, to be more specific, a carboxylic acid group-containing active hydrogen compound, a sulfonic acid group-containing active hydrogen compound, a hydroxyl group-containing active hydrogen compound, a hydrophilic group-containing polybasic acid, and a polyoxyethylene group-containing active hydrogen compound.

Examples of the carboxylic acid group-containing active hydrogen compound include dihydroxyl carboxylic acid such as 2,2-dimethylol acetic acid, 2,2-dimethylol lactic acid, 2,2-dimethylol propionic acid (DMPA), 2,2-dimethylolbutanoic acid (DMBA), 2,2-dimethylol butyric acid, and 2,2-dimethylol valeric acid; diaminocarboxylic acid such as lysine and arginine; and their metal salts and ammonium salts. Preferably, 2,2-dimethylolpropionic acid (DMPA), or 2,2-dimethylolbutanoic acid (DMBA) is used.

Examples of the sulfonic acid group-containing active hydrogen compound include dihydroxybutane sulfonic acid and dihydroxypropane sulfonic acid that are obtained from synthesis reaction between an epoxy group-containing compound and acid sulfite. Examples also include N,N-bis(2-hydroxyethyl)-2-aminoethanesulfonic acid, N,N-bis(2-hydroxyethyl)-2-aminobutanesulfonic acid, 1,3-phenylenediamine-4,6-disulfonic acid, diaminobutanesulfonic acid, diaminopropane sulfonic acid, 3,6-diamino-2-toluenesulfonic acid, 2,4-diamino-5-toluenesulfonic acid, N-(2-aminoethyl)-2-aminoethanesulfonic acid, 2-aminoethanesulfonic acid, N-(2-aminoethyl)-2-aminobutanesulfonic acid, and metal salts and ammonium salts of those sulfonic acids.

For the hydroxyl group-containing active hydrogen compound, for example, N-(2-aminoethyl) ethanolamine is used.

Examples of the hydrophilic group-containing polybasic acid include polybasic acid containing sulfonic acid, to be more specific, 5-sulfoisophthalic acid, sulfoterephthalic acid, 4-sulfophthalic acid, 5-(p-sulfophenoxy) isophthalic acid, 5-(sulfopropoxy) isophthalic acid, 4-sulfonaphthalene-2,7-dicarboxylic acid, sulfopropylmalonic acid, sulfosuccinic acid, 2-sulfobenzoic acid, 2,3-sulfobenzoic acid, 5-sulfosalicylic acid, alkyl ester of those carboxylic acids, and also metal salts and ammonium salts of those sulfonic acids. Preferably, sodium salts of 5-sulfoisophthalic acid, or sodium salts of 5-sulfoisophthalic acid dimethyl ester are used.

The polyoxyethylene group-containing active hydrogen compound is a compound containing a polyoxyethylene group in the main chain or side chain, and having at least one active hydrogen group.

For the polyoxyethylene group-containing active hydrogen compound, for example, polyethylene glycol (e.g., number average molecular weight 200 to 6000, preferably 300 to 3000), one-end-terminated polyoxyethylene glycol (e.g., alkoxyethylene glycol with its one end capped with an alkyl group having 1 to 4 carbon atoms, number average molecular weight 200 to 6000, preferably 300 to 3000), or a polyoxyethylene side chain-containing polyol is used.

The polyoxyethylene side chain-containing polyol is a compound containing a polyoxyethylene group in its side chain and having two or more active hydrogen groups, and can be synthesized in the following manner.

Specifically, first, a urethane-forming reaction is conducted by mixing diisocyanate (described later) and a one-end-capped polyoxyethylene glycol (e.g., alkoxy ethylene glycol of which the terminal is capped with an alkyl group of 1 to 4 carbon atoms, having a number average molecular weight of 200 to 6000, or preferably 300 to 3000) at such a ratio that the amount of the isocyanate group in the diisocyanate (described later) exceeds the amount of the hydroxyl group in the one-end-capped polyoxyethylene glycol, and, if necessary, unreacted diisocyanate (described later) is removed from the mixture, to thereby obtain a polyoxyethylene chain-containing monoisocyanate.

Subsequently, a urea-forming reaction is conducted by mixing the polyoxyethylene chain-containing monoisocyanate and dialkanolamine (e.g., diethanolamine) at such a ratio that the amount of the isocyanate group in the polyoxyethylene group-containing monoisocyanate is nearly equal to the amount of the secondary amino group in the dialkanolamine.

For the diisocyanate for producing a polyoxyethylene side chain-containing polyol, it is not particularly limited, and a known diisocyanate may be used. Examples of the diisocyanate include, to be more specific, aliphatic diisocyanates such as pentamethylenediisocyanate (PDI) and hexamethylene diisocyanate (HDI); and alicyclic diisocyanates such as 1,4- or 1,3-bis(isocyanatomethyl)cyclohexane (H6XDI), 3-isocyanatomethyl-3,5,5-trimethyl cyclohexylisocyanate (also known as isophorone diisocyanate (IPDI)), 4,4'-methylene bis(cyclohexylisocyanate) (H12MDI) and 2,6-bis(isocyanatomethyl)norbornane (NBDI).

For the polyoxyethylene group-containing active hydrogen compound, furthermore, for example, monohydric alcohol to which ethylene oxide is added (e.g., polyoxyethylenelaurylether, polyoxyethyleneoleylether, polyoxyethylenestearylether ), polyoxyethylene-containing sorbitan esters (e.g., polyoxyethylenesorbitan oleate, polyoxyethylenesorbitan ricinoleate, polyoxyethylenesorbitan oleate) polyoxyethylene-containing alkylphenols (e.g., polyoxyethyleneoctylphenolether, polyoxyethylenenonylphenolether) and polyethylene glycol-containing higher fatty acid esters (e.g., polyethylene glycollaurate, polyethylene glycol oleate, polyethylene glycol stearate) are used.

The self-repairing polyurethane resin material of the present invention can also be used as a blocked isocyanate in which free isocyanate groups contained in the molecule are blocked by blockers.

The blocked isocyanate can be produced, for example, by allowing the self-repairing polyurethane resin material to react with the blocker.

Examples of blockers include blockers of oxime, phenol, alcohol, imine, amine, carbamic acid, urea, imidazole, imide, mercaptan, active methylene, acid amide (lactam), and bisulfites.

Examples of the oxime blocker include formaldoxime, acetaldoxime, methyl ethyl ketone oxime, cyclohexanoneoxime, acetoxime, diacetyl monoxime, benzophenone oxime, 2,2,6,6-tetramethylcyclohexanoneoxime, diisopropylketoneoxime, methyltert-butylketoneoxime, diisobutylketoneoxime, methylisobutylketoneoxime, methylisopropylketoneoxime, methyl 2,4-dimethylpentylketoneoxime, methyl 3-ethylheptylketoneoxime, methyl isoamyl ketoneoxime, n-amylketoneoxime, 2,2,4,4-tetramethyl-1,3-cyclobutanedionemonoxime, 4,4'-dimethoxybenzophenoneoxime, and 2-heptanoneoxime.

Examples of phenol blockers include phenol, cresol, ethylphenol, n-propylphenol, isopropylphenol, n-butylphenol, sec-butylphenol, tert-butylphenol, n-hexylphenol, 2-ethylhexylphenol, n-octylphenol, n-nonylphenol, di-n-propylphenol, diisopropylphenol, isopropylcresol, di-n-butylphenol, di-sec-butylphenol, di-tert-butylphenol, di-n-octylphenol, di-2-ethylhexylphenol, di-n-nonylphenol, nitrophenol, bromophenol, chlorophenol, fluorophenol, dimethylphenol, styrenated phenol, methylsalicylate, 4-hydroxybenzoic acid methyl ester, 4-hydroxybenzoic acid benzyl ester, hydroxybenzoic acid 2-ethylhexyl ester, 4-[(dimethylamino) methyl]phenol, 4-[(dimethylamino) methyl]nonylphenol, bis(4-hydroxyphenyl) acetic acid, pyridinol, 2- or 8-hydroxyquinoline, 2-chloro-3-pyridinol, and pyridine-2-thiol.

Examples of the alcohol blocker include, for example, methanol, ethanol, 2-propanol, n-butanol, sec-butanol, 2-ethylhexylalcohol, 1- or 2-octanol, cyclohexylalcohol, ethylene glycol, benzylalcohol, 2,2,2-trifluoroethanol, 2,2,2-trichloroethanol, 2-(hydroxymethyl) furan, 2-methoxyethanol, methoxypropanol, 2-ethoxyethanol, n-propoxyethanol, 2-butoxyethanol, 2-ethoxyethoxyethanol, 2-ethoxybutoxyethanol, butoxyethoxyethanol, 2-ethylhexyloxyethanol, 2-butoxyethylethanol, 2-butoxyethoxyethanol, N,N-dibutyl-2-hydroxyacetamido, N-hydroxysuccinimide, N-morpholine ethanol, 2,2-dimethyl-1,3-dioxolane-4-methanol, 3-oxazolidine ethanol, 2-hydroxymethylpyridine, furfuryl alcohol, 12-hydroxystearic acid, triphenylsilanol, and methacrylic acid 2-hydroxyethyl ester.

Examples of the imine blocker include ethyleneimine, polyethyleneimine, 1,4,5,6-tetrahydropyrimidine, and guanidine.

Examples of the amine blocker include dibutylamine, diphenylamine, aniline, N-methylaniline, carbazole, bis(2,2,6,6-tetramethylpiperidinyl) amine, di-n-propylamine, diisopropylamine, isopropylethylamine, 2,2,4-, or 2,2,5-trimethylhexamethyleneamine, N-isopropylcyclohexylamine, dicyclohexylamine, bis(3,5,5-trimethylcyclohexyl) amine, piperidine, 2,6-dimethylpiperidine, 2,2,6,6-tetramethylpiperidine, (dimethylamino)-2,2,6,6-tetramethylpiperidine, 2,2,6,6-tetramethyl-4-piperidine, 6-methyl-2-piperidine, and 6-aminocaproic acid.

Examples of the carbamic acid blocker include N-phenylcarbamate phenyl.

Examples of the urea blocker include urea, thiourea, and ethyleneurea.

Examples of the imidazole blocker include imidazole, 2-methylimidazole, 2-ethyl-4-methylimidazole, 2-isopropyl imidazole, 2,4-dimethylimidazole, 4-methylimidazole, 2-phenylimidazole, 4-methyl-2-phenylimidazole, pyrazole, 3-methylpyrazole, 3,5-dimethylpyrazole, 1,2,4-triazole, and benzotriazole.

Examples of the imide blocker include succinimide, maleimide, and phthal imide.

Examples of the mercaptan blocker include butylmercaptan, dodecylmercaptan, and hexylmercaptan.

Examples of the active methylene blocker include Meldrum's acid, malonic acid dimethyl ester, methyl acetoacetate, ethyl acetoacetate, malonic acid di-tert-butyl ester, malonic acid 1-tert-butyl 3-methyl ester, malonic acid diethyl ester, acetoacetic acid tert-butyl ester, 2-acetylacetoxyethylmethacrylate, acetylacetone, and cyanoethyl acetate.

Examples of the acid amide (lactam) blocker include acetanilide, N-methylacetamide, acetic acidamide, $\varepsilon$-caprolactam, $\delta$-valerolactam, $\gamma$-butyroiactam, pyrrolidone, 2,5-piperazine dione, and laurolactam.

The blocker is not limited to the above, and for example, other blockers such as benzoxazolone, isatoic acid anhydride, and tetrabutylphosphonium·acetate can be used.

These blocking agents may be used singly or in a combination of two or more.

As the blocker, those blockers that dissociate at preferably 200°C or less, preferably 100 to 180°C are used. To be more specific, for example, active methylene compounds such as ethyl acetoacetate, or oximes such as methyl ethyl ketone oxime are used.

The blocked isocyanate can be obtained by blending a self-repairing polyurethane resin material with a blocker at a proportion such that the blocker is excessive relative to the isocyanate group in the self-repairing polyurethane resin material, and then allowing the mixture to react under known conditions.

The self-repairing polyurethane resin material of the present invention can be used as an aqueous blocked isocyanate in which free isocyanate groups contained in the molecule are blocked by a blocker, and which is dispersed or dissolved in water.

The method for producing the aqueous blocked isocyanate is not particularly limited, and for example, the aqueous blocked isocyanate can be produced by the following method: first, a self-repairing polyurethane resin material (hereinafter partly blocked isocyanate) in which a portion of the free isocyanate groups in the self-repairing polyurethane resin material is blocked with a blocker is produced, and thereafter, the free isocyanate groups (remained isocyanate groups without being blocked by a blocker) in the partly blocked isocyanate is allowed to react with a compound (hereinafter hydrophilic group-containing active hydrogen compound) having both of a hydrophilic group and an active hydrogen group.

In this method, first, a portion of the free isocyanate groups in the self-repairing polyurethane resin material is allowed to react with a blocker to produce a partly blocked isocyanate.

For the blocking agent, for example, the above-described blocking agents can be used.

The partly blocked isocyanate can be obtained by blending a self-repairing polyurethane resin material with a blocker at a proportion such that the isocyanate group in the self-repairing polyurethane resin material is excessive relative to the blocker, and then allowing the mixture to react under known conditions.

Next, in this method, the free isocyanate group (the remaining portion of the isocyanate group) of the partly blocked isocyanate is allowed to react with a hydrophilic group-containing active hydrogen compound.

The aqueous blocked isocyanate can be produced by blending the partly blocked isocyanate with the hydrophilic group-containing active hydrogen compound at a proportion such that the hydrophilic group-containing active hydrogen compound is excessive relative to the free isocyanate group in the partly blocked isocyanate, and then allowing the mixture to react under known conditions.

Such a self-repairing polyurethane resin material can produce a self-repairing polyurethane resin with excellent self-repairing and chemical resistance properties.

To be specific, a self-repairing polyurethane resin with excellent self-repairing and chemical resistance properties can be produced by a method, for example, by allowing the self-repairing polyurethane resin material to react with the active hydrogen group-containing compound (described later), as described later. In such a reaction, other components can be blended to an extent that would not hinder the object of the present invention. The other components can be blended in an amount of, relative to 100 parts by mass of the active hydrogen group-containing compound (described later), preferably 5 parts by mass or less, more preferably 1 part by mass or less.

Therefore, the self-repairing polyurethane resin material of the present invention can be suitably used in production of a self-repairing polyurethane resin.

To be more specific, when the self-repairing polyurethane resin is a two-component polyurethane resin, in which a curing agent and a main component are mixed at use and are allowed to react, the above-described self-repairing polyurethane resin material is used as the curing agent.

That is, the self-repairing polyurethane resin of the present invention can be produced by reaction between the above-described curing agent (that is, self-repairing polyurethane resin material) and the main component.

The main component contains an active hydrogen group-containing compound.

Examples of the active hydrogen group-containing compound include the above-described low-molecular-weight polyol and the above-described high-molecular weight polyol, and preferably, the above-described high-molecular weight polyol is used.

For the high-molecular weight polyol, more preferably, acrylic polyol is used.

For the material of the acrylic polyol, as described above, hydroxyl group-containing (meth)acrylate and a copolymerizable vinyl monomer are used. Preferably, hydroxyl group-containing (meth)acrylate and/or a copolymerizable vinyl monomer each having a glass transition temperature of -100°C to 20°C is used.

Examples of the hydroxyl group-containing (meth)acrylate include hydroxyalkyl (meth)acrylates such as hydroxyethyl (meth)acrylate, hydroxypropyl (meth)acrylate, and 4-hydroxybutyl (meth)acrylate. Examples of the hydroxyl group-containing (meth)acrylate further include ε-caprolactone adduct of hydroxyalkyl (meth)acrylate, and to be specific, for example, PLACCEL FM1, PLACCEL FM1D, PLACCEL FM2D, PLACCEL FM3, PLACCEL FM3X, PLACCEL FM4, PLACCEL FM5, PLACCEL FA1, PLACCEL FA1DDM, PLACCEL FA2D, PLACCEL FA5, and PLACCEL FA10L (all manufactured by Daicel Corporation., trade name) are used. Examples of the copolymerizable vinyl monomer include methylacrylate, ethylacrylate, isopropylacrylate, butyl (meth)acrylate, isobutylacrylate, t-butylacrylate, 3-methylbutyl (meth)acrylate, 2-ethylhexyl (meth)acrylate, isodecylmethacrylate, n-octylacrylate, isooctylacrylate, lauryl (meth)acrylate, isostearylacrylate, tridecyl (meth)acrylate, isononylacrylate, methoxypolyethylene glycol (meth)acrylate, ethoxydiethylene glycol (meth)acrylate, methoxytriethylene glycol (meth)acrylate, 2-ethylhexyl diglycol (meth)acrylate, phenoxy (meth)acrylate, phenoxydiethylene glycol (meth)acrylate, and phenoxypolyethylene glycol (meth)acrylate, and preferably 2-ethylhexylmethacrylate and laurylmethacrylate are used, more preferably 2-ethylhexylmethacrylate and laurylmethacrylate are used in combination.

When 2-ethylhexylmethacrylate and/or laurylmethacrylate are used, their content relative to a total amount of the hydroxyl group-containing (meth)acrylate and the copolymerizable vinyl monomer (that is, acrylic polyol material) is, for example, 5 mol% or more, preferably 10 mol% or more, more preferably 15 mol% or more, particularly preferably 20 mol% or more, and for example, 60 mol% or less, preferably 55 mol% or less, more preferably 50 mol% or less, particularly preferably 45 mol% or less.

The acrylic polyol has a number average molecular weight of, for example, 1000 or more, preferably 2000 or more, more preferably 3000 or more, particularly preferably 5000 or more, and for example, 50000 or less, preferably 30000 or less, more preferably 20000 or less, particularly preferably 10000 or less.

The acrylic polyol has a hydroxyl number of, for example, 20mgKOH/g or more, preferably 50mgKOH/g or more, more preferably 80mgKOH/g or more, particularly preferably 90mgKOH/g or more, and for example, 300mgKOH/g or less, preferably 200mgKOH/g or less, more preferably 150mgKOH/g or less.

The acrylic polyol has a glass transition temperature of, for example, -20°C or more, preferably 0°C or more, more preferably 10°C or more, particularly preferably 20°C or more, and for example, 150°C or less, preferably 100°C or less, more preferably 50°C or less, particularly preferably 30°C or less.

These high-molecular weight polyols may be used singly, or may be used in a combination of two or more.

For the active hydrogen group-containing compound, monol can be further used in combination.

Monol is a compound (monohydric alcohol) having one hydroxyl group, and examples thereof include methanol, ethanol, propanol, isopropanol, butanol, isobutanol, s-butanol, t-butanol, pentanol, hexanol, 2-ethyl-1-hexanol, heptanol, octanol, nonanol, decanol, undecanol, dodecanol, tridecanol, tetradecanol, hexadecanol (1-hexadecanol), heptadecanol, octadecanol (1-octadecanol 1), nonadecanol, eicosanol (1-eicosano 1), tetracosanol (1-tetracosanol 1), and their isomers, and furthermore, other alkanols (C20 to 50 alcohol); alkenyl alcohols such as oleylalcohol and linoleyl alcohol; alkadienol such as octadienol; and aliphatic monols such as propylene oxide adduct monol (polypropylenemonol) and ethylene oxide adduct monol (polyethylene monol). Examples of the monoalcohol also include alicyclic monols such as cyclohexanol and methylcyclohexanol; and araliphatic monol such as benzylalcohol.

These monols may be used singly or in a combination of two or more.

For the active hydrogen group-containing compound, hydroxyl group-containing (meth)acrylate can be used singly.

The self-repairing polyurethane resin can be produced by, for example, polymerization methods such as bulk polymerization and solution polymerization.

In bulk polymerization, for example, the self-repairing polyurethane resin material is stirred with nitrogen gas stream, and a main component (active hydrogen group-containing compound) is added thereto, and the mixture is allowed to react at a reaction temperature of 50 to 250°C, even more preferably 50 to 200°C for about 0.5 to 15 hours.

In solution polymerization, to an organic solvent that is the same as the organic solvent used for diluting the above-described self-repairing polyurethane resin material, a self-repairing polyurethane resin material and a main component (active hydrogen group-containing compound) are added, and the mixture is allowed to react at a reaction temperature of 50 to 120°C, preferably 50 to 100°C for about 0.5 to 15 hours.

Furthermore, in the above-described polymerization reaction, as necessary, for example, the above-described urethanizing catalyst can be added.

In bulk polymerization and solution polymerization, for example, the self-repairing polyurethane resin material and the main component (active hydrogen group-containing compound) are blended so that the equivalent ratio (NCO/active hydrogen group) of the isocyanate group in the self-repairing polyurethane resin material relative to the active hydrogen group in the main component (active hydrogen group-containing compound) is, for example, 0.5 to 1.3, preferably 0.6 to 1.1.

When the above-described polymerization reaction is to be conducted more industrially, the self-repairing polyurethane resin can be obtained by known methods such as, for example, one-shot method and prepolymer method.

In one-shot method, for example, the self-repairing polyurethane resin material and the main component (active hydrogen group-containing compound) are formulated (mixed) so that the equivalent ratio (NCO/active hydrogen group) of the isocyanate group in the self-repairing polyurethane resin material relative to the active hydrogen group in the active hydrogen group-containing compound is, for example, 0.5 to 1.3, preferably 0.6 to 1.1, and then thereafter, the mixture is allowed to react (curing reaction), for example, at room temperature to 250°C, preferably at room temperature to 200°C, for, for example, 5 minutes to 72 hours, preferably 4 to 24 hours. The curing temperature may be a constant temperature, or may be increased/decreased stepwise.

In prepolymer method, for example, first, the self-repairing polyurethane resin material and a portion of the main component (active hydrogen group-containing compound) (preferably, high-molecular weight polyol) are allowed to react, thereby synthesizing an isocyanate group-terminated prepolymer having isocyanate groups at its molecular terminals. Then, the obtained isocyanate group-terminated prepolymer is allowed to react with the remaining portion of the main component (active hydrogen group-containing compound) (preferably, low-molecular-weight polyol), thereby causing curing reaction. In the prepolymer method, the remaining portion of the main component (active hydrogen group-containing compound) is used as a chain extender.

To synthesize the isocyanate group-terminated prepolymer, the self-repairing polyurethane resin material and a portion of the main component (active hydrogen group-containing compound) are formulated (mixed) so that the equivalent ratio (NCO/active hydrogen group) of the isocyanate group in the self-repairing polyurethane resin material relative to the active hydrogen group in the portion of the main component (active hydrogen group-containing compound) is, for example, 1.1 to 20, preferably 1.3 to 10, more preferably 1.3 to 6, and then the mixture is allowed to react in the reaction vessel, for example, at room temperature to 150°C, preferably at 50 to 120°C, for, for example, 0.5 to 18 hours, preferably 2 to 10 hours. In this reaction, as necessary, the above-described urethanizing catalyst may be added, and after the completion of reaction, as necessary, the unreacted self-repairing polyurethane resin material can be removed, for example, by a known removal method such as distillation or extraction.

Then, to cause the reaction between the obtained isocyanate group-terminated prepolymer and the remaining portion of the main component (active hydrogen group-containing compound), the isocyanate group-terminated prepolymer and the remaining portion of the main component (active hydrogen group-containing compound) are formulated (mixed) so that the equivalent ratio (NCO/active hydrogen group) of the isocyanate group in the isocyanate group-terminated prepolymer relative to the active hydrogen group in the remaining portion of the main component (active hydrogen group-containing compound) is, for example, 0.5 to 1.3, preferably 0.6 to 1.1, and the mixture is allowed to react (curing reaction), for example, at room temperature to 250°C, preferably at room temperature to 200°C, for, for example, 5 minutes to 72 hours, preferably 1 to 24 hours.

The self-repairing polyurethane resin can be produced in this manner. That is, the self-repairing polyurethane resin is a reaction product of the above-described self-repairing polyurethane resin material and the active hydrogen group-containing compound.

When producing the self-repairing polyurethane resin, as necessary, known additives such as a plasticizer, antiblocking agent, heat-resistant stabilizer, light-resistant stabilizer, antioxidant, releasing agent, catalyst, antifoaming agent, and further, pigment, dye, lubricant, filler, and hydrolysis inhibitor can be blended at a suitable ratio. These additives can be added when synthesizing the components, or can be added when blending/dissolving the components, or can be added after synthesis.

Such a self-repairing polyurethane resin is produced by using the self-repairing polyurethane resin material of the present invention, and therefore has excellent self-repairing and chemical resistance properties.

To be more specific, when abrasions are caused on the surface of the self-repairing polyurethane resin, the damage can be self-repaired after elapse of time of, 0.1 hour or more, preferably 0.2 hours or more, generally 24 hours or less, and at, for example, 25°C or more, preferably 40°C or more, for example, 100°C or less, preferably 60°C or less.

Furthermore, the self-repairing polyurethane resin also has, as described above, excellent chemical resistance properties.

Excellent self-repairing and chemical resistance properties of the self-repairing polyurethane resin of the present invention, and also excellent balance of these are clearly disclosed by comparison between Examples and Comparative Examples to be described later.

That is, when producing the self-repairing polyurethane resin material, comparison between an embodiment in which pentamethylenediisocyanate is used (Examples to be described later) and an embodiment in which hexamethylenediisocyanate is used (Comparative Example to be described later), although self-repairing properties are exhibited in both cases, chemical resistance properties are greatly different despite the fact that only one is different in their carbon numbers. The result shows critical properties of the effect.

The present inventors speculates that the following unexpected results are shown: in the self-repairing polyurethane resin, a high cohesive strength of the structure derived from pentamethylenediisocyanate contributed to the significant effects on chemical resistance properties, but that structure derived from pentamethylenediisocyanate does not substantially have effects on the structure having self-repairing properties, that is, the structure derived from the active hydrogen group-containing compound having a molecular weight in a particular region.

The self-repairing polyurethane resin is suitably produced by the above-described method for producing a self-repairing polyurethane resin.

When the produced self-repairing polyurethane resin, and the coating agent and elastomer to be described later can be dissolved in a known solvent, the composition can be directly analyzed by, for example, NMR method.

Meanwhile, when the produced self-repairing polyurethane resin, and the coating agent and elastomer to be described later cannot be dissolved in a solvent, it may be difficult to directly analyze the composition by, for example, NMR method.

In such a case, alkali thermal decomposition is conducted until it is soluble in the solvent, and thereafter, methods such as liquid chromatography, gas chromatography, mass spectrum method, and NMR method are used singly or in suitable combination, to obtain the information on the composition from the analysis on the decomposed component (fragment).

Therefore, such a self-repairing polyurethane resin can be widely used in the fields in which self-repairing and chemical resistance properties are required, to be specific, in a coating material, elastomer material, adhesive, plastic lens, leather, RIM molded articles, slush powders, elastic molded articles (spandex), and urethane foam. In particular, the self-repairing polyurethane resin can be suitably used as a coating material and an elastomer material.

To be more specific, when the self-repairing polyurethane resin is used as a coating material (that is, self-repairing coating material (coating material with self-repairing properties)), for example, the above-described curing agent (self-repairing polyurethane resin material) and a main component are mixed and the mixture is applied on a substrate.

The substrate is not particularly limited, and examples thereof include metals such as stainless steel, phosphoric acid-treated steel, zinc steel, iron, copper, aluminum, and brass; resins such as acrylic resin, olefin resin, polycarbonate resin, polyethyleneterephthalate resin, polyethylenenaphthalate resin, polybutylenephthalate resin, polystyrene resin, AS resin, ABS resin, polycarbonate-ABS resin, 6-nylon resin, 6,6-nylon resin, MXD 6 nylon resin, polyvinyl chloride resin, polyvinyl alcohol resin, polyurethane resin, phenol resin, melamine resin, polyacetal resin, chlorinated polyolefin resin, polyolefin resin, polyamide resin, poly ether ether ketone resin, polyphenylene sulfide resin, NBR resin, chloroprene resin, SBR resin, and SEBS resin; and glasses. The surface of the substrate can be treated with, for example, corona discharge treatment, and base coating treatment.

The application method is not particularly limited, and examples thereof include a known coating method such as brush coating, gravure coating, reverse coating, roll coating, bar coating, spray coating, air knife coating, and dipping.

Thereafter, the obtained coating is, as necessary, cured by heating. The heating conditions are as follows. The heating temperature is, for example, 25°C or more, preferably 50°C or more, and for example, 160°C or less, preferably 140°C or less. The heating time is, for example, 10 minutes or more, preferably 20 minutes or more, and for example, 2 hours or less, preferably 1 hour or less.

The coating layer (coating material) made of the self-repairing polyurethane resin is produced in this manner.

The coating layer has a thickness of, for example, 3 μm or more, preferably 5 μm or more, and for example, 200 μm or less, preferably 50 μm or less.

The produced coating layer has excellent chemical resistance and self-repairing properties, and therefore can be suitably used for, coating applications in, for example, various industrial products including plastic films, plastic sheets, plastic foams, lenses for glasses, fiber, synthetic leather, metal, and woods.

When the self-repairing polyurethane resin is used as the elastomer material (that is, self-repairing elastomer material (elastomer material with self-repairing properties)), for example, after mixing the above-described curing agent (self-repairing polyurethane resin material) and the main component, as necessary, defoamed and then injected into a preheated mold.

Then, the obtained mixture is heated and cured in the mold. The heating conditions are as follows. The heating temperature is, for example, 25°C or more, preferably 50°C or more, and for example, 200°C or less, preferably 150°C or less. The heating time is, for example, 30 minutes or more, preferably 60 minutes or more, and for example, 48 hours or less, preferably 24 hours or less.

Thereafter, it is released from the mold, thereby producing the polyurethane elastomer (elastomer material) made of the self-repairing polyurethane resin.

The polyurethane elastomer can be aged after being released from the mold, as necessary, at room temperature for about within 7 days.

The produced elastomer is excellent in chemical resistance and self-repairing properties, and therefore is suitably used in various industrial fields such as for example, industrial model resin, two-wheel, or four-wheel vehicle fields, mold resin field using 3D-printers, medical field, optical field, and robot field.

The self-repairing polyurethane resin can be produced as an energy ray-curable polyurethane resin that is cured by irradiation of, for example, active energy-ray.

To obtain the self-repairing polyurethane resin as an energy ray-curable polyurethane resin, for example, in the above-described reaction of the self-repairing polyurethane resin material and the active hydrogen group-containing compound, as the active hydrogen group-containing compound, a hydroxyl group-containing unsaturated compound and/or a high-molecular weight polyol having an ethylenically unsaturated group at its molecular terminal is used.

The hydroxyl group-containing unsaturated compound has both one or more ethylenically unsaturated group and one or more hydroxyl groups in its molecule.

To be more specific, the hydroxyl group-containing unsaturated compound has both one or more hydroxyl group, and one or more ethylenically unsaturated group-containing group of at least one selected from the group consisting of an acryloyl group, methacryloyl group, vinylphenyl group, propenylether group, allylether group, and vinyl ether group. For the ethylenically unsaturated group-containing group, preferably, an acryloyl group and/or methacryloyl group, even more preferably, an acryloyl group is used.

When the ethylenically unsaturated group-containing group is an acryloyl group and/or methacryloyl group, for the hydroxyl group-containing unsaturated compound, to be specific, for example, a hydroxyl group-containing (meth)acrylate is used.

Examples of the hydroxyl group-containing (meth)acrylate include monohydroxyl mono(meth)acrylate having one hydroxyl group and having one acryloyl group or methacryloyl group in one molecule, polyhydroxyl mono(meth)acrylate having a plurality of hydroxyl groups and having one acryloyl group or methacryloyl group in one molecule, monohydroxyl poly (meth)acrylate having one hydroxyl group and a plurality of acryloyl groups and/or methacryloyl groups in one molecule, and polyhydroxyl poly (meth)acrylate having a plurality of hydroxyl groups and having a plurality of acryloyl groups and/or methacryloyl groups in one molecule.

Examples of the monohydroxyl mono(meth)acrylate include 2-hydroxyethyl (meth)acrylate, 2-hydroxypropyl (meth)acrylate, 4-hydroxybutyl (meth)acrylate, 2-hydroxybutyl (meth)acrylate, 2-phenoxypropyl (meth)acrylate, 4-hydroxycyclohexyl (meth)acrylate, 3-chloro-2-hydroxypropyl (meth)acrylate, 2-hydroxy-3-phenyloxypropyl (meth)acrylate, 2-hydroxy-3-phenoxypropyl (meth) acrylate, 2-(meth)acryloyloxyethyl-2-hydroxyethylphthalic acid, 2-(meth) acryloyloxy ethylsuccinic acid, 2-(meth) acryloyloxy ethylhexahydrophthalic acid, 2-(meth) acryloyloxy ethylphthalic acid, 2-(meth) acryloyloxy ethyl-2-hydroxyethylphthalic acid, 2-hydroxyalkyl (meth)acryloylphosphate, pentanediolmono(meth)acrylate, neopentyl glycolmono(meth)acrylate, polyethylene glycolmono(meth)acrylate, and polypropylene glycolmono(meth)acrylate.

Examples of the polyhydroxyl mono(meth)acrylate include trimethylolpropanemono(meth)acrylate, glycerinmono(meth)acrylate, and pentaerythritolmono(meth)acrylate.

Examples of the monohydroxyl poly (meth)acrylate include trimethylolpropanedi (meth)acrylate, glycerindi (meth)acrylate, pentaerythritoltri (meth)acrylate, dipentaerythritolpenta (meth)acrylate, and 2-hydroxy-3-acryloyloxy propylmethacrylate (trade name NK ester 701A, manufactured by Shin-Nakamura Chemical Co., Ltd.).

Examples of the polyhydroxyl poly (meth)acrylate include pentaerythritoldi (meth)acrylate, dipentaerythritoltri (meth)acrylate, and dipentaerythritoltetra (meth)acrylate.

When the ethylenically unsaturated group-containing group is a vinylphenyl group, the hydroxyl group-containing unsaturated compound includes 4-vinylphenol, 2-hydroxyethyl-4-vinylphenylether, (2-hydroxypropyl)-4-vinylphenylether, (2,3-dihydroxypropyl)-4-vinylphenylether, and 4-(2-hydroxyethyl) styrene.

When the ethylenically unsaturated group-containing group is a propenylether group, the hydroxyl group-containing unsaturated compound includes propenylalcohol, 2-hydroxyethylpropenylether, and 2,3-dihydroxypropylpropenylether.

When the ethylenically unsaturated group-containing group is an allylether group, the hydroxyl group-containing unsaturated compound includes allylalcohol, 2-hydroxyethylallylether, and 2-hydroxypropylallylalcohol.

When the ethylenically unsaturated group-containing group is a vinyl ether group, the hydroxyl group-containing unsaturated compound includes 2-hydroxyethylvinyl ether and 2-hydroxypropylvinyl ether.

These hydroxyl group-containing unsaturated compounds may be used singly or in a combination of two or more.

For the hydroxyl group-containing unsaturated compound, preferably, hydroxyl group-containing (meth)acrylate, even more preferably, monohydroxyl mono(meth)acrylate is used.

Examples of the high-molecular weight polyol having an ethylenically unsaturated group at its molecular terminal include acrylic polyol having an ethylenically unsaturated group at its molecular terminal. These acrylic polyols are produced by a known method.

The above-described hydroxyl group-containing unsaturated compound, and the above-described high-molecular weight polyol having an ethylenically unsaturated group at its molecular terminal can also be used in combination with the photopolymerizable compound (to be more specific, poly (meth)acrylate having no hydroxyl group) to be described later.

In such a case, preferably, pentaerythritoltri (meth)acrylate as the hydroxyl group-containing unsaturated compound, and pentaerythritoltetra (meth)acrylate and/or dipentaerythritolhexa (meth)acrylate as the photopolymerizable compound are used in combination.

As necessary, for example, a known photopolymerization initiator can be added to the self-repairing polyurethane resin, and the viscosity can be adjusted with a solvent.

Then, when the self-repairing polyurethane resin is prepared as the energy ray-curable polyurethane resin, for example, the above-described self-repairing polyurethane resin material and acrylic polyol (active hydrogen group-containing compound) containing an ethylenically unsaturated group at its molecular terminal are mixed, and the mixture is applied on the substrate and dried.

The drying conditions are as follows. The heating temperature is, for example, 25°C or more, preferably 50°C or more, and for example, 100°C or less, preferably 80°C or less. The heating time is, for example, 1 minute or more, preferably 3 minutes or more, and for example, 1 hour or less, preferably 0.5 hours or less.

Thereafter, an active energy ray is applied. The self-repairing polyurethane resin (energy ray-curable polyurethane resin) is cured in this manner.

Examples of the active energy ray include ultraviolet ray and electron beam. The irradiance of the active energy ray is, for example, 50 to 5000mJ/cm$^2$, preferably 100 to 1000mJ/cm$^2$.

After the active energy ray irradiation, as necessary, it is allowed to stand under an environment of, for example, 10 to 150°C and a relative humidity of 20 to 80% for 0.5 to 10 days.

The coating layer can be produced as a cured product of the energy ray-curable polyurethane resin in this manner.

The coating layer has a thickness of, for example, 3 μm or more, preferably 5 μm or more, and for example, 200 μm or less, preferably 50 μm or less.

The produced coating layer has excellent chemical resistance and self-repairing properties, and therefore suitably used for coating applications in various industrial products such as, for example, vehicle application, housings for smartphones and mobile products, plastic films, plastic sheets, plastic foams, lenses for glasses, fiber, synthetic leather, metals, and woods.

The self-repairing coating material and self-repairing elastomer material of the present invention can be used in combination with conventionally known other useful components, such as additives including, for example, various stabilizers, slip agent, and pigments. Furthermore, other polymers can be used in combination in a range that does not hinder the object of the present invention.

Example

The present invention is described in detail in the following with reference to Examples and Comparative Examples, but the present invention is not limited to these. In the description below, "parts" and "%" are based on mass unless otherwise specified. The values in Examples below can be replaced with the values used in the embodiments (that is, upper limit value or lower limit value).

Measurement methods used in Examples and Comparative Examples are shown below.

<Isocyanate monomer concentration (unit: mass%)>

The unreacted isocyanate monomer (pentamethylenediisocyanate, hexamethylenediisocyanate) concentration in the polyurethane resin material was calculated using pentamethylenediisocyanate obtained in Production Example 1 to be described later or a commercially available hexamethylenediisocyanate as standard substance, based on calibration curve made from the area value of the chromatogram obtained under HPLC analysis conditions below.

Device; Prominence (manufactured by Shimadzu Corporation)

1) Pump LC-20AT
2) Degasser DGU-20A3
3) Autosampler SIL-20A
4) Column constant temperature bath COT-20A
5) Detector SPD-20A

Column; SHISEIDO SILICA SG-120
Column temperature; 40°C
Eluent; n-hexane/methanol/1,2-dichloroethane = 90/5/5(volume ratio) Flow rate; 0.2mL/min
Detection method; UV 225 nm

<Isocyanate group conversion rate (unit: %)>

The isocyanate group conversion rate was determined as a ratio of the peak area on the side of the high-molecular weight than the peak of the pentamethylenediisocyanate or hexamethylenediisocyanate relative to a total peak area based on the chromatogram obtained with the following GPC measurement conditions.

Device; HLC-8020(manufactured by Tosoh Corporation)

Column; G 1000HXL, G 2000HXL and G 3000HXL (all manufactured by Tosoh Corporation, trade name) are connected in series
Column temperature; 40°C
Eluent; tetrahydrofuran
Flow rate; 0.8mL/min
Detection method; differential refraction
Standard substance; polyethylene oxide (manufactured by Tosoh Corporation, trade name: TSK standard polyethylene oxide)

<Isocyanate group concentration (unit: mass%)>

The isocyanate group concentration of the polyurethane resin material was measured by toluene/dibutylamine·hydrochloric acid method in conformity with JIS K-1603-1 (2007) using a potential difference titrator.

<Average functionality of isocyanate group>

The average functionality of isocyanate group was measured in the same manner as the isocyanate group concentration of the polyurethane resin material and the above-described (isocyanate group conversion rate), and calculated using the following formula based on the obtained number average molecular weight.

$$\text{Average functionality of isocyanate group} = A \times B/4202$$

(where A represents isocyanate group concentration and B represents number average molecular weight.)

<Ratio of allophanate group to isocyanate trimer>

A $^{1}$H-NMR measurement was conducted with the device and the conditions below, and the mole ratio (allophanate group/isocyanate trimer) of the allophanate group relative to the isocyanate trimer was calculated using the formula below. For the chemical shift in ppm, tetramethylsilane in the solvent having 0 ppm of chemical shift was used.

Device; JNM-AL 400 (manufactured by JEOL)
Conditions; measurement frequency: 400MHz, solvent: $d_6$-DMSO, concentration: 5%
Measurement temperature: 25°C, scanning time 128
Allophanate group: 8.3 to 8.7 ppm
Isocyanate trimer: 3.8 ppm

$$\text{Ratio of allophanate group to isocyanate trimer} = \text{Integrated value of allophanate group}/(\text{Integrated value of isocyanate trimer}/6)$$

<Isocyanate trimer concentration (unit: mass%)>

Measurement was conducted in the same manner as in the above-described (isocyanate group conversion rate), and the ratio of the peak area corresponding to triple the molecular weight of pentamethylenediisocyanate or hexamethylenediisocyanate relative to a total peak area was defined as isocyanate trimer concentration.

<Concentration of number average molecular weight of 1000 or more (unit: mass%)>

Measurement was conducted in the same manner as in the above-described (isocyanate group conversion rate), and the peak area for the number average molecular weight of 1000 or more relative to the total peak area was defined as the number average molecular weight of 1000 or more concentration.

<Hydroxyl number of polyol (unit: mgKOH/g)

The hydroxyl number of polyol was measured by the method in conformity with JIS K-1557-1 using a potential difference titrator.

<Glass transition temperature of polyol (unit: °C)

Device: DSC (DSC 6200, manufactured by Seiko Instruments Inc.)
Sample vessel: aluminum pan
Measurement temperature:-70 to 100°C
Temperature increase rate: generally 10°C/min

<Number average molecular weight of polyol>

Measurement was conducted in the same manner as in the above-described (isocyanate group conversion rate) and then the number average molecular weight of polyol was obtained.

Production Example 1 (production of pentamethylenediisocyanate)

99.9 mass% of pentamethylenediisocyanate (hereinafter may be referred to as PDI) was produced in the same manner as in Example 1 of DESCRIPTION of International Patent Publication WO 2012/121291.

To be more specific, a pressurized reactor with jacket equipped with an electromagnetic induction stirrer, an automatic pressure regulating valve, a thermometer, a nitrogen inlet line, a phosgene inlet line, a condenser, and a material feed pump was charged with 2000 parts by mass of o-dichlorobenzene. Then, 2300 parts by mass of phosgene was added from the phosgene inlet line, and stirring was started. Cold water was allowed to go through the reactor jacket so that the internal temperature was keptto about 10°C. Then, a solution of 400 parts by mass of pentamethylenediamine (a) dissolved in 2600 parts by mass of o-dichlorobenzene was fed through the feed pump taking 60 minutes, and cold phosgenation was started at 30°C or less and under normal pressure. After the completion of the feed, a light-brown white slurry was formed in the pressurized reactor.

Then, while the temperature of the internal liquid of the reactor was gradually increased to 160°C, the pressure was increased to 0.25MPa, and further hot phosgenation was performed under a pressure of 0.25MPa, and at a reaction temperature of 160°C for 90 minutes. During the hot phosgenation, 1100 parts by mass of phosgene was further added. In the process of the hot phosgenation, the internal liquid of the pressurized reactor became light-brown clear solution. After completion of hot phosgenation, at 100 to 140°C, nitrogen gas was allowed to pass through at 100 L/hour, and degassing was performed.

Thereafter, o-dichlorobenzene was distilled off under reduced pressure, and then pentamethylene diisocyanate was distilled off also under reduced pressure, thereby producing 558 parts by mass of pentamethylenediisocyanate ($a_0$) with purity of 98.7%.

Then, a four-neck flask equipped with a mixer, a thermometer, a reflux pipe, and a nitrogen inlet tube was charged with 558 parts by mass of pentamethylene diisocyanate (ao), and 0.02 parts by mass of tris (tridecyl) phosphite (manufactured by Johoku Chemical Co., Ltd, trade name: JP-333E) relative to 100 parts by mass of pentamethylene diisocyanate, and while introducing nitrogen, heat treatment was performed under normal pressure, at 210°C, for 2 hours, thereby producing 553 parts by mass of pentamethylene diisocyanate ($a_1$) having a purity of 98.3%. The yield of pentamethylene diisocyanate in heat treatment was 99.6%.

Then, pentamethylene diisocyanate ($a_1$) after heat treatment was introduced to a glass-made flask, and using a distillation apparatus equipped with a distillation pipe charged with four elements of packing materials (manufactured by Sumitomo Heavy Industries, Ltd., trade name: Sumitomo/Sulzer Laboratory packing EX type), a distillation column (manufactured by SIBATA SCIENTIFIC TECHNOLOGY LTD., trade name: distillation column K type) having a reflux ratio adjusting timer, and a condenser, the pentamethylene diisocyanate was rectified while further being refluxed under the conditions of 127 to 132°C and 2.7KPa, thereby producing pentamethylene diisocyanate (a) having a purity of 99.9 mass%.

<Self-repairing polyurethane resin material>

Example 1 (production of polyurethane resin material (A)) (Reference Example)

A four-neck flask equipped with a mixer, a thermometer, a reflux pipe, and a nitrogen inlet tube was charged with 1000 parts by mass of PDI, 129.7 parts by mass of PCD 500 (polycarbonatediol, trade name ETERNACOLL UH-50, manufactured by Ube Industries, Ltd., functionality 2, number average molecular weight 500), 0.6 parts by mass of 2,6-di(tert-butyl)-4-methylphenol (hereinafter may be referred to as BHT), and 0.6 parts by mass oftris (tridecyl) phosphite, and the mixture was allowed to react at 80°C for 2 hours, thereafter cooled, and the internal temperature was kept to 60°C.

Then, 0.15 parts by mass of N-(2-hydroxypropyl)-N,N,N-trimethylammonium-2-ethylhexanoate was added as the trimerization catalyst. The refraction and isocyanate group concentration were measured, and reaction was continued until a predetermined reaction rate (20% (also applies below)) was reached. The reaction rate reached a predetermined reaction rate after about 40 minutes, and therefore 0.15 parts by mass of o-toluenesulfonamide was added (isocyanate group conversion rate: 20 mass%). The obtained reaction solution was allowed to pass through a thin film distillation apparatus (degree of vacuum 0.093KPa, temperature 150°C) to remove unreacted PDI, and 0.02 parts by mass of o-toluenesulfonamide was further added relative to 100 parts by mass of the obtained product, thereby producing a polyurethane resin material (A).

Reference Examples 10 and 11 (production of polyurethane resin materials (J) and (K))

The polyurethane resin material (A) had a pentamethylenediisocyanate concentration (free PDI concentration (also applies below)) of 0.5 mass%, the isocyanate group concentration of 18%, the average functionality of 3.8, the mole ratio of allophanate group/isocyanate trimer of 0.8, the isocyanate trimer concentration of 25 mass%, and the concentration of number average molecular weight of 1000 or more of 50%. The measurement values of these physical properties are shown in Table 1.

Example 2 (production of polyurethane resin material (B)) (Reference Example)

A polyurethane resin material (B) was produced in the same manner as in Example 1, except that 53.5 parts by mass of PCL 303 (polycaprolactonetriol, trade name PLACCEL 303, manufactured by Daicel Corporation., functionality 3, molecular weight 300) was used instead of PCD 500. The measurement values of the physical properties of the polyurethane resin material (B) are shown in Table 1.

Example 3 (production of polyurethane resin material (C))

A four-neck flask equipped with a mixer, a thermometer, a reflux pipe, and a nitrogen inlet tube was charged with 1000 parts by mass of PDI, 127.8 parts by mass of PCD 500, 0.8 parts by mass of PCL 303, 0.6 parts by mass of BHT, and 0.6 parts by mass of tris (tridecyl) phosphite, and the mixture was allowed to react at 80°C for 2 hours and then thereafter cooled to keep the internal temperature to 60°C.

Then, 0.15 parts by mass of N-(2-hydroxypropyl)-N,N,N-trimethylammonium-2-ethylhexanoate was added as the trimerization catalyst. The refraction and the isocyanate purity were measured, and the reaction was continued until reaching the predetermined reaction rate. The predetermined reaction rate was reached about after 30 minutes, and therefore 0.15 parts by mass of o-toluenesulfonamide was added (isocyanate group conversion rate: 20 mass%). The obtained reaction solution was allowed to pass through a thin film distillation apparatus (degree of vacuum 0.093KPa, temperature 150°C) to remove unreacted PDI, and 0.02 parts by mass of o-toluenesulfonamide was added relative to 100 parts by mass of the obtained composition, thereby producing a polyurethane resin material (C). The measurement values of the physical properties of the polyurethane resin material (C) are shown in Table 1.

Examples 4 to 6 (production of polyurethane resin materials (D) to (F))

Polyurethane resin materials (D) to (F) were produced in the same manner as in Example 3, except that the types and the parts blended of the active hydrogen group-containing compound were changed in accordance with Table 1. The measured values of the polyurethane resin materials (D) to (F) for the physical properties are shown in Table 1.

Example 7 (production of polyurethane resin material (G)) (Reference Example)

A polyurethane resin material (G) was produced in the same manner as in Example 1, except that the types and the parts blended of the active hydrogen group-containing compound were changed in accordance with Table 1.

The measurement values of the physical properties of the polyurethane resin material (G) are shown in Table 1.

Example 8 (production of polyurethane resin material (H)) (Reference Example)

A polyurethane resin material (H) was produced in the same manner as in Example 3, except that The types and the parts blended of the active hydrogen group-containing compound were changed in accordance with Table 1. The measurement values of the physical properties of the polyurethane resin material (H) are shown in Table 1.

Example 9 (production of polyurethane resin material (I)) (Reference Example)

A polyurethane resin material (I) was produced in the same manner as in Example 1, except that the types and the parts blended of the active hydrogen group-containing compound were changed in accordance with Table 1. The measured values of the polyurethane resin material (I) for the physical properties are shown in Table 1.

[Table 1]

| No. | | Ex. 1 * | Ex. 2 * | Ex. 3 | Ex. 4 | Ex. 5 | Ex. 6 | Ex. 7 * | Ex. 8* | |
|---|---|---|---|---|---|---|---|---|---|---|
| Polyurethane resin material | | A | B | C | D | E | F | G | H | |
| Polyisocyanate Amount blended (parts by mass) | PDI | 1000 | 1000 | 1000 | 1000 | 1000 | 1000 | 1000 | 1000 | |
| | HDI | - | - | - | - | - | - | - | - | |
| Active hydrogen group-containing compound Amount blended (parts by mass) | 1,3-BG | - | - | - | - | - | - | - | 9.4 | |
| | PCD500 | 129.7 | - | 127.8 | 125.8 | 64.9 | 43.5 | - | 77.8 | |
| | PCD1000 | - | - | - | - | - | - | 259.5 | - | |
| | PCD2000 | - | - | - | - | - | - | - | - | |
| | PTMEG250 | - | - | - | - | - | - | - | - | |
| | PTMEG650 | - | - | - | - | - | - | - | - | |
| | PCL303 | - | 53.5 | 0.8 | 1.6 | 26.8 | 35.6 | - | - | |
| | CAPA3022 | - | - | - | - | - | - | - | - | |
| Active hydrogen group-containing compound | Average functionality | 2 | 3 | 2 | 2 | 2.3 | 2.5 | 2 | 2 | |
| | Dihydric/ trihydric | - | - | 66 | 32 | 1 | 0.5 | - | - | |
| | Average molecular weight | 500 | 300 | 499 | 497 | 442 | 410 | 1000 | 456 | |
| Type of functional group contained | | Allophanate ·trimer | Allophanate ·trimer | Allophanate ·trimer | Allophanate ·trimer | Allophanate ·trimer | Allophanate ·trimer | Allophanate ·trimer | Allophanate ·trimer | |

(continued)

| No. | | Ex. 1 * | Ex. 2 * | Ex. 3 | Ex. 4 | Ex. 5 | Ex. 6 | Ex. 7 * | Ex. 8 * | |
|---|---|---|---|---|---|---|---|---|---|---|
| Polyurethane resin material | | A | B | C | D | E | F | G | H | |
| Physical properties | Isocyanate monomer concentration (mass%) | 0.6 | 0.5 | 0.5 | 0.6 | 0.6 | 0.5 | 0.4 | 0.4 | |
| | Isocyanate group concentration mass%) | 18 | 19.5 | 18.1 | 18.3 | 18.6 | 19 | 15.8 | 20 | |
| | Average functionality | 3.8 | 5 | 3.8 | 3.8 | 4.2 | 4.3 | 3.7 | 3.8 | |
| | Allophanate group/trimer (mole ratio) | 0.8 | 0.7 | 0.8 | 0.8 | 0.8 | 0.8 | 0.7 | 0.7 | |
| | Trimer concentration (mass%) | 25 | 19 | 25 | 23 | 22 | 20 | 22 | 28 | |
| | Ratio of number average molecular weight 1000 or more (%) | 50 | 76 | 52 | 55 | 59 | 62 | 56 | 41 | |
| No. | | Ex. 9 * | Ex. 10* | Ref. Ex. 11 | Ex. 12 * | Ex. 13* | Ex. 14* | Comp. Ex.1 | Comp. Ex.2 | Comp. Ex.3 |
| Polyurethane resin material | | I | J | K | L | M | N | T | U | V |
| Polyisocyanate Amount blended (parts by mass) | PDI | 1000 | 1000 | 1000 | 1000 | 1000 | 1000 | 1000 | - | - |
| | HDI | - | - | - | - | - | - | - | 1000 | 1000 |

(continued)

| Polyurethane resin material | | I | J | K | L | M | N | T | U | V |
|---|---|---|---|---|---|---|---|---|---|---|
| Active hydrogen group-containing compound Amount blended (parts by mass) | 1,3-BG | - | - | - | - | - | - | 23.4 | - | - |
| | PCD500 | - | 3.9 | - | 162.2 | - | 4.3 | - | 118.9 | 148.6 |
| | PCD1000 | - | - | - | - | - | - | - | - | - |
| | PCD2000 | 518.9 | - | - | - | - | - | - | - | - |
| | PTMEG250 | - | - | 39.5 | - | - | - | - | - | - |
| | PTMEG650 | - | - | 65.9 | - | - | - | - | - | - |
| | PCL303 | - | - | - | - | 66.9 | - | - | - | - |
| | CAPA3022 | - | 52.3 | - | - | - | - | - | - | - |
| | Average functionality | 2 | - | 2 | 2 | 3 | 2 | 2 | 2 | 2 |
| | Dihydric/ trihydric | | | | | | | | | |
| | Average molecular weight | 2000 | 267 | 500 | 500 | 300 | 500 | 90 | 500 | 500 |
| Type of functional group contained | | Allophanate ·trimer | Allophanate ·trimer | Allophanate ·trimer | Allophanate | Allophanate | Allophanate ·trimer | Allophanate ·trimer | Allophanate ·trimer | Allophan ate |

(continued)

| Polyurethane resin material | | I | J | K | L | M | N | T | U | V |
|---|---|---|---|---|---|---|---|---|---|---|
| Physical properties | Isocyanate monomer concentration (mass%) | 0.6 | 0.4 | 0.5 | 0.6 | 0.7 | 0.7 | 0.4 | 0.4 | 0.6 |
| | Isocyanate group concentration (mass%) | 13.9 | 19.3 | 17.7 | 14.1 | 18.5 | 23.2 | 22.3 | 16.3 | 12.7 |
| | Average functionality | 3.6 | 4.6 | 4 | 4.5 | 6.2 | 3.3 | 3.7 | 3.8 | 4.4 |
| | Allophanate group/trimer (mole ratio) | 0.6 | 0.8 | 0.8 | - | - | 0.07 | 0.6 | 0.8 | - |
| | Trimer concentration (mass%) | 20 | 20 | 23 | - | - | 55 | 32 | 26 | - |
| | Ratio of number average molecular weight 1000 or more (%) | 63 | 69 | 54 | 67 | 85 | 20 | 28 | 54 | 70 |
| *Reference Examples | | | | | | | | | | |

[Table 2]

| No. | | Ex. 15* | Ex. 16* | Ex. 17 * | Ex. 18* | Ex. 19* |
|---|---|---|---|---|---|---|
| Polyurethane resin material | | O | P | Q | R | S |
| Active hydrogen group -containing compound | Average functionality | 2 | 2 | 2 | 2 | 2 |
| | Dihydric/trihydric | - | - | - | - | - |
| | Average molecular weight | 500 | 500 | 500 | 500 | 500 |
| Type of functional group contained | | Allophanate ·trimer | Allophanate ·trimer | Allophanate ·trimer | Urethane ·trimer | Urethane ·trimer |
| Physical properties | Isocyanate monomer concentration (mass%) | 0.7 | 0.6 | 0.6 | 0.2 | 0.2 |
| | Isocyanate group concentration (mass%) | 22.3 | 14.7 | 14.5 | 20.1 | 20.3 |
| | Average functionality | 3.4 | 4.4 | 4.5 | 3.6 | 3.4 |
| | Allophanate group/ trimer(mole ratio) | 0.2 | 16 | 24 | - | - |
| | Trimer concentration (mass%) | 50 | 3.6 | 2.4 | 40 | 42 |
| | Ratio of number average molecular weight 1000 or more (%) | 25 | 64 | 65 | 39 | 36 |
| *Reference Examples | | | | | | |

[Table 3]

| | | | | | | | | | | |
|---|---|---|---|---|---|---|---|---|---|---|
| Polyurethane resin | | Ex. 22* | Ex. 23* | Ex. 24 | Ex. 25 | Ex. 26 | Ex. 27 | Ex. 28 * | Ex. 29 * | |
| | | A | B | C | D | E | F | G | H | |
| Polyurethane resin material | | Ex. 1* | Ex. 2* | Ex. 3 | Ex. 4 | Ex. 5 | Ex. 6 | Ex. 7 * | Ex. 8* | |
| | | A | B | C | D | E | F | G | H | |
| Evaluation | Martens hardness | 79 | 99 | 80 | 84 | 85 | 96 | 76 | 100 | |
| | Self-repairing properties 1 | Good | Average | Good | Good | Good | Average | Good | Average | |
| | Gloss retention (%) | 98 | 90 | 98 | 97 | 97 | 90 | 97 | 90 | |
| | Chemical resistance properties | Good | Excellent | Good | Excellent | Excellent | Excellent | Good | Good | |
| Polyurethane resin | | Ex. 30 * | Ex. 31* | Ref. Ex. 32 | Ex. 33 * | Ex. 34 * | Ex. 35 * | Comp. Ex.5 | Comp. Ex.6 | Comp. Ex.7 |
| | | I | J | K | L | M | N | T | U | V |
| Polyurethane resin material | | Ex. 9* | Ex. 10* | Ref. Ex. 11 | Ex. 12* | Ex. 13 * | Ex. 14* | Comp. Ex.1 | Comp. Ex.2 | Comp. Ex.3 |
| | | I | J | K | L | M | N | T | U | V |
| Evaluation | Martens hardness | 55 | 96 | 66 | 65 | 98 | 99 | 106 | 63 | 60 |
| | Self-repairing properties 1 | Average | Average | Average | Excellent | Average | Average | Bad | Average | Average |
| | Gloss retention (%) | 91 | 91 | 92 | 100 | 91 | 90 | 70 | 94 | 92 |
| | Chemical resistance properties | Average | Excellent | Average | Average | Average | Excellent | Good | Bad | Bad |

(continued)

| | | | | | | | | | | |
|---|---|---|---|---|---|---|---|---|---|---|
| Polyurethane resin | | Ex. 30 * | Ex. 31* | Ref. Ex. 32 | Ex. 33 * | Ex. 34 * | Ex. 35 * | Comp. Ex.5 | Comp. Ex.6 | Comp. Ex.7 |
| | | I | J | K | L | M | N | T | U | V |
| Polyurethane resin material | | Ex. 9* | Ex. 10* | Ref. Ex. 11 | Ex. 12* | Ex. 13 * | Ex. 14* | Comp. Ex.1 | Comp. Ex.2 | Comp. Ex.3 |
| | | I | J | K | L | M | N | T | U | V |
| Polyurethane resin | | Ex. 36 * | Ex. 37 * | Ex. 38 * | Ex. 39* | Ex. 40 * | | | | |
| | | O | P | Q | R | S | | | | |
| Polyurethane resin material | | Ex. 15 * | Ex. 16 * | Ex. 17 * | Ex. 18 * | Ex. 19* | | | | |
| | | O | P | Q | R | S | | | | |
| Evaluation | Martens hardness | 86 | 72 | 67 | 71 | 68 | | | | |
| | Self-repairing properties 1 | Average | Good | Excellent | Excellent | Excellent | | | | |
| | Gloss retention (%) | 94 | 97 | 100 | 100 | 100 | | | | |
| | Chemical resistance properties | Excellent | Good | Average | Average | Average | | | | |
| *Reference Examples | | | | | | | | | | |

[Table 4]

| No. | | Ex. 41 * | Ex. 42 * | Comp. Ex.8 |
|---|---|---|---|---|
| Energy ray-curable polyurethane resin | | Ex. 20* | Ex. 21 * | Comp. Ex.4 |
| | | W | X | Y |
| Polyurethane resin material | | Ex. 1 | Ex. 1 | Comp. Ex. 1 |
| | | A | A | T |
| Evaluation | Martens hardness | 90 | 96 | 112 |
| | Self-repairing properties 1 | Average | Average | Bad |
| | Gloss retention (%) | 94 | 90 | 60 |
| | Chemical resistance properties | Excellent | Excellent | Excellent |
| *Reference Examples | | | | |

[Table 5]

| No. | | | Ex. 43 * | Ex. 44 * | Ex. 45* | Comp. Ex.9 |
|---|---|---|---|---|---|---|
| Polyurethane resin (elastomer) | | | Z | AA | AB | AC |
| Polyurethane resin material | | | Ex. 1 * | Ex. 1 * | Ex. 1 * | Comp. Ex.1 |
| | | | A | A | A | T |
| Evaluation | Hardness (C) | | 10 | 5 | 5 | 8 |
| | Appearance | | Cloudy | Transparent | Transparent | Non-Transparent |
| | Breaking Strength(kPa) | | 330 | 350 | 150 | 400 |
| | Elongation at Break (%) | | 600 | 900 | 500 | 700 |
| | Tear Strength (kN/m) | | 1.6 | 1.5 | 1.2 | 1.2 |
| | Self-repairing properties 2 (%) | 23°C | 99.8 | 99.5 | 99.5 | 99.0 |
| | | 70°C | 99.5 | 99.1 | 99.2 | 98.7 |
| | Tackiness | | Excellent | Good | Good | Good |
| *Reference Examples | | | | | | |

Polyurethane resin materials (J) and (K) were produced in the same manner as in Example 3, except that the types and the parts blended of the active hydrogen group-containing compound were changed in accordance with Table 1. The measured values of the polyurethane resin materials (J) and (K) for the physical properties are shown in Table 1.

Example 12 (production of polyurethane resin material (L)) (Reference Example)

A four-neck flask equipped with a mixer, a thermometer, a reflux pipe, and a nitrogen inlet tube was charged with 1000 parts by mass of PDI, 162.2 parts by mass of PCD 500, 0.6 parts by mass of BHT, and 0.6 parts by mass of tris (tridecyl) phosphite, and the temperature was increased to 85°C, thereby causing urethane-forming reaction for 3 hours. Then, the internal temperature was increased to 100°C, and thereafter 0.05 parts by mass of lead octylate was added as the allophanate-forming catalyst. The mixture was allowed to react until the isocyanate group concentration reached the calculated value, and then 0.05 parts by mass of o-toluenesulfonamide was added. The obtained reaction solution was allowed to pass through a thin film distillation apparatus (degree of vacuum 0.093KPa, temperature 150°C) to remove unreacted PDI, and 0.02 parts by mass of o-toluenesulfonamide was added relative to 100 parts by mass of the obtained composition, thereby producing a polyurethane resin material (L). The measurement values of the physical properties of the polyurethane resin material (L) are shown in Table 1.

Example 13 (production of polyurethane resin material (M)) (Reference Example)

A polyurethane resin material (M) was produced in the same manner as in Example 12, except that the active hydrogen group-containing compound shown in Table 1 was used in the parts by mass shown in Table 1. The measurement values of the physical properties of the polyurethane resin material (M) are shown in Table 1.

Example 14 (production of polyurethane resin material (N)) (Reference Example)

A polyurethane resin material (N) was produced in the same manner as in Example 1, except that the active hydrogen group-containing compound shown in Table 1 was used in the parts by mass shown in Table 1. The measurement values of the physical properties of the polyurethane resin material (N) are shown in Table 1.

Example 15 (production of polyurethane resin material (O)) (Reference Example)

A four-neck flask equipped with a mixer, a thermometer, a reflux pipe, and a nitrogen inlet tube was charged with 10 parts by mass of the polyurethane resin material (L) obtained in Example 12, and 90 parts by mass of the polyurethane resin material (N) obtained in Example 14. Thereafter, the mixture was stirred at 60°C for 1 hour, thereby producing a polyurethane resin material (O). The measurement values of the physical properties of the polyurethane resin material (O) are shown in Table 2.

Example 16 (production of polyurethane resin material (P)) (Reference Example)

A four-neck flask equipped with a mixer, a thermometer, a reflux pipe, and a nitrogen inlet tube was charged with 93.5 parts by mass of the polyurethane resin material (L) obtained in Example 12 and 6.5 parts by mass of the polyurethane resin material (N) obtained in Example 14. Thereafter, the mixture was stirred at 60°C for 1 hour, thereby producing a polyurethane resin material (P). The measurement values of the physical properties of the polyurethane resin material (P) are shown in Table 2.

Example 17 (production of polyurethane resin material (Q)) (Reference Example)

A four-neck flask equipped with a mixer, a thermometer, a reflux pipe, and a nitrogen inlet tube was charged with 95.7 parts by mass of a polyurethane resin material (L) obtained in Example 12, and 4.3 parts by mass of a polyurethane resin material (N) obtained in Example 14. Thereafter, the mixture was stirred at 60°C for 1 hour, thereby producing a polyurethane resin material (Q). The measurement values of the physical properties of the polyurethane resin material (Q) are shown in Table 2.

Example 18 (production of polyurethane resin material (R)) (Reference Example)

A four-neck flask equipped with a mixer, a thermometer, a reflux pipe, and a nitrogen inlet tube was charged with 1000 parts by mass of PDI, 0.6 parts by mass of BHT, and 0.6 parts by mass of tris (tridecyl) phosphite, and the internal temperature was kept to 60°C.

Then, 0.3 parts by mass of N-(2-hydroxypropyl)-N,N,N-trimethylammonium-2-ethylhexanoate was added as the trimerization catalyst. The refraction and the isocyanate group concentration were measured, and the reaction was continued until reaching the predetermined reaction rate. The predetermined reaction rate was reached after about 60 minutes, and therefore 0.3 parts by mass of o-toluenesulfonamide was added (isocyanate group conversion rate: 10 mass%). The obtained reaction solution was allowed to pass through a thin film distillation apparatus (degree of vacuum 0.093KPa, temperature 150°C) to remove unreacted PDI, and 0.02 parts by mass of o-toluenesulfonamide was added relative to 100 parts by mass of the obtained composition, thereby producing a polyurethane resin material ($R_0$). The polyurethane resin material ($R_0$) had an isocyanate group concentration of 25%.

Then, a four-neck flask equipped with a mixer, a thermometer, a reflux pipe, and a nitrogen inlet tube was charged with 300 parts by mass of polyurethane resin material ($R_0$), 34.3 parts by mass of PCD 500, and 83.6 parts by mass of ethyl acetate, and the mixture was allowed to react at 75°C for 4 hours, thereby producing a polyurethane resin material (R). The measurement values of the physical properties of the polyurethane resin material (R) are shown in Table 2.

Example 19 (production of polyurethane resin material (S)) (Reference Example)

A four-neck flask equipped with a mixer, a thermometer, a reflux pipe, and a nitrogen inlet tube was charged with 300 parts by mass of the polyurethane resin material ($R_0$) obtained in Example 18, 34.3 parts by mass of PCL 205 (trade name PLACCEL 205, manufactured by Daicel Corporation., functionality 2, number average molecular weight 500), and 83.6 parts by mass of ethyl acetate, and the mixture was allowed to react at 75°C for 4 hours, thereby producing a polyurethane resin material (S). The measurement values of the physical properties of the polyurethane resin material (S) are shown in Table 2.

Comparative Example 1 (production of polyurethane resin material (T))

A four-neck flask equipped with a mixer, a thermometer, a reflux pipe, and a nitrogen inlet tube was charged with 1000 parts by mass of PDI, 23.4 parts by mass of 1,3-butanediol, 0.6 parts by mass of BHT, and 0.6 parts by mass of tris (tridecyl) phosphite, and the mixture was allowed to react at 80°C for 2 hours and then thereafter cooled, to keep the internal temperature to 60°C.

Then, 0.15 parts by mass of N-(2-hydroxypropyl)-N,N,N-trimethylammonium-2-ethylhexanoate was added as the trimerization catalyst. The refraction and the isocyanate group concentration were measured, and the reaction was continued until reaching the predetermined reaction rate. The predetermined reaction rate was reached about after 30 minutes, and therefore 0.15 parts by mass of o-toluenesulfonamide was added (isocyanate group conversion rate: 20 mass%). The obtained reaction solution was allowed to pass through a thin film distillation apparatus (degree of vacuum 0.093KPa, temperature 150°C) to remove unreacted PDI, and 0.02 parts by mass of o-toluenesulfonamide was added relative to 100 parts by mass of the obtained composition, thereby producing a polyurethane resin material (T). The measurement values of the physical properties of the polyurethane resin material (T) are shown in Table 1.

Comparative Example 2 (production of polyurethane resin material (U))

A four-neck flask equipped with a mixer, a thermometer, a reflux pipe, and a nitrogen inlet tube was charged with 1000 parts by mass of hexamethylenediisocyanate (trade name TAKENATE 700, manufactured by Mitsui Chemicals, hereinafter may be referred to as HDI), 118.9 parts by mass of PCD 500, 0.6 parts by mass of BHT, and 0.6 parts by mass of tris (tridecyl) phosphite, and the mixture was allowed to react at 80°C for 2 hours and then thereafter cooled, to keep the internal temperature to 60°C.

Then, 0.15 parts by mass of N-(2-hydroxypropyl)-N,N,N-trimethylammonium-2-ethylhexanoate was added as the trimerization catalyst. The refraction and the isocyanate group concentration were measured, and the reaction was continued until reaching the predetermined reaction rate. The predetermined reaction rate was reached after about 50 minutes, and 0.15 parts by mass of o-toluenesulfonamide was added (isocyanate group conversion rate: 20 mass%). The obtained reaction solution was allowed to pass through a thin film distillation apparatus (degree of vacuum 0.093KPa, temperature 150°C) to remove unreacted HDI, and 0.02 parts by mass of o-toluenesulfonamide was added relative to 100 parts by mass of the obtained composition, thereby producing a polyurethane resin material (U). The measurement values of the physical properties of the polyurethane resin material (U) are shown in Table 1.

Comparative Example 3 (production of polyurethane resin material (V))

A four-neck flask equipped with a mixer, a thermometer, a reflux pipe, and a nitrogen inlet tube was charged with 1000 parts by mass of HDI, 148.6 parts by mass of PCD 500, 0.6 parts by mass of BHT, and 0.6 parts by mass of tris (tridecyl) phosphite, and the temperature was increased to 85°C, thereby causing urethane-forming reaction for 3 hours. Then, the internal temperature was increased to 100°C, and thereafter 0.05 parts by mass of lead octylate was added as the allophanate-forming catalyst. The mixture was allowed to react until the isocyanate group concentration reached the calculated value, and then 0.05 parts by mass of o-toluenesulfonamide was added. The obtained reaction solution was allowed to pass through a thin film distillation apparatus (degree of vacuum 0.093KPa, temperature 150°C) to remove unreacted HDI, and 0.02 parts by mass of o-toluenesulfonamide was added relative to 100 parts by mass of the obtained composition, thereby producing a polyurethane resin material (V). The measurement values of the physical properties of the polyurethane resin material (V) are shown in Table 1.

<Energy ray-curable polyurethane resin>

Example 20 (Production of energy ray-curable polyurethane resin (W)) (Reference Example)

A four-neck flask equipped with a mixer, a thermometer, a reflux pipe, and an air inlet tube was charged with 300 parts by mass of the polyurethane resin material (A) obtained in Example 1, 275 parts by mass ofNK ester 701A (acrylic polyol having ethylenically unsaturated bond at its molecular terminal, manufactured by Shin-Nakamura Chemical Co., Ltd.), 0.3 parts by mass of hydroquinone as the polymerization inhibitor, and 191.8 parts by mass of ethyl acetate.

Then, the internal temperature was increased to 70°C, and then thereafter 0.3 parts by mass of dibutyltindilaurate was added, thereby causing urethane-forming reaction for 8 hours.

The reaction was stopped at the point when the isocyanate peak disappeared in FT-IR, thereby producing an energy ray-curable polyurethane resin (W).

Example 21 (Production of energy ray-curable polyurethane resin (X)) (Reference Example)

An energy ray-curable polyurethane resin (X) was produced in the same manner as in Example 20, except that 149.2 parts by mass of hydroxyethylacrylate instead of NK ester 701Aand 149.8 parts by mass of ethyl acetate were used.

Comparative Example 4 (Production of energy ray-curable polyurethane resin (Y))

A four-neck flask equipped with a mixer, a thermometer, a reflux pipe, and an air inlet tube was charged with 300 parts by mass of the polyurethane resin material (T) obtained in Comparative Example 1, 340.7 parts by mass ofNK ester 701A (manufactured by Shin-Nakamura Chemical Co., Ltd.), 0.3 parts by mass of hydroquinone as the polymerization inhibitor, and 213.7 parts by mass of ethyl acetate. Then, the internal temperature was increased to 70°C, and then thereafter 0.3 parts by mass of dibutyltinlaurate was added, thereby causing urethane-forming reaction for 8 hours. The reaction was stopped at the point when the isocyanate peak disappeared in FT-IR, thereby producing an energy ray-curable polyurethane resin (Y).

<Self-repairing polyurethane resin>

Synthesis Example 1 (Production of acrylic polyol A)

A four-neck flask equipped with a mixer, a thermometer, a reflux condenser, and a nitrogen inlet tube was charged with 100 parts by mass of butyl acetate as the organic solvent, and while conducting nitrogen replacement, the temperature was increased to 140°C. Then, in the mixture, a mixture liquid of 12 parts of methyl methacrylate, 65 parts of 2-ethylhexyl methacrylate, 23 parts of 2-hydroxyethyl methacrylate as the polymerizable monomer, and 1 part by mass of azoisobutyronitrile (hereinafter abbreviated as AIBN) as the polymerization initiator were fed, taking 4 hours. 0.2 parts by mass of AIBN was added after 1 hour and also after 2 hours of the completion of the feed. After the addition of AIBN, reaction was performed for 2 hours, thereby producing an acrylic polyol (A).

The acrylic polyol (A) had a glass transition temperature of 14°C, a hydroxyl value (in solid) of 98mgKOH/g, and a number average molecular weight of 6890.

Synthesis Example 2 (Production of acrylic polyol B)

A four-neck flask equipped with a mixer, a thermometer, a reflux condenser, and a nitrogen inlet tube was charged with 100 parts by mass of butyl acetate as the organic solvent, and while conducting nitrogen replacement, the temperature was increased to 140°C. Then, in the mixture, a mixture liquid of 32 parts of methyl methacrylate, 35 parts of 2-ethylhexyl methacrylate, 10 parts by mass of laurylmethacrylate, and 23 parts of 2-hydroxyethyl methacrylate as the polymerizable monomer, and 1 part by mass of AIBN as the polymerization initiator were fed, taking 4 hours. 0.2 parts by mass of AIBN was added after 1 hour and also after 2 hours of the completion of the feed. After the addition of AIBN, reaction was performed for 2 hours, thereby producing an acrylic polyol (B).

The acrylic polyol (B) had a glass transition temperature of 25°C, a hydroxyl value (in solid) of 98mgKOH/g, and a number average molecular weight of 7050.

Example 22 (Production of polyurethane resin (A)) (Reference Example)

The polyurethane resin material (A) obtained in Example 1 was blended with the acrylic polyol (A) obtained in Synthesis Example 1 so that the equivalent ratio (NCO/OH) of the isocyanate group in the polyurethane resin material relative to the hydroxyl group in the polyol was 1.0, and butyl acetate was further added so that the mixture liquid had a viscosity of 30 to 50mPa·s. Thereafter, the mixture was stirred at 23°C for 90 seconds. Then, the mixture liquid was applied onto a standard test plate in conformity with JIS G 3313 (type: electroplating zinc steel plate, hereinafter abbreviated as test plate), and thereafter cured at 140°C for 30 minutes, thereby producing a polyurethane resin (A) having a thickness of about 35 μm.

The produced polyurethane resin (A) was allowed to stand in a room with a temperature of 23°C and a relative humidity 55% for 7 days.

Reference Examples 23 and 28 to 40, Examples 24-27 , Comparative Examples 5 to 7 (Production of polyurethane resins (B) to (V))

Polyurethane resins (B) to (V) having a thickness of about 35 μm were produced in the same manner as in Example 22, except that instead of the polyurethane resin material (A), the polyurethane resin materials shown in Table 3 were used.
The produced polyurethane resins (B) to (V) were allowed to stand in a room with a temperature of 23°C and a relative humidity 55% for 7 days.

<Energy ray-curable polyurethane resin>

Example 41 (Production of polyurethane resin (W)) (Reference Example)

The energy ray-curable polyurethane resin (W) obtained in Example 20 was blended relative to the solid content of the polyurethane resin material with 5 wt% of a photopolymerization initiator (Irgacure 184 (manufactured by BASF Japan)), and isopropanol was further added so that the mixture liquid had a viscosity of 30 to 50mPa·s. The mixture was stirred at 23°C for 90 seconds. Then, the mixture liquid was applied onto a test plate, heated at 60°C for 5 minutes, and cured with a ultraviolet ray irradiance of 900mJ/cm$^2$, thereby producing a polyurethane resin (W) having a thickness of 15 μm.

Reference Example 42, Comparative Example 8 (Production of polyurethane resin (X) and (Y))

Polyurethane resin (X) and (Y) were produced in the same manner as in Example 41, except that the polyurethane resin materials shown in Table 4 were used.

<Elastomer>

Example 43 (Production of polyurethane resin (Z)) (Reference Example)

A four-neck flask equipped with a mixer, a thermometer, a reflux condenser, and a nitrogen inlet tube was charged with 300 parts by mass of the polyurethane resin material (A) obtained in Example 1,57.7 parts by mass of silicone polyol (manufactured by Shin-Etsu Chemical Co., Ltd., trade name: X-22-170BX), and 0.03 parts by mass of dibutyltin(IV) dilaurate (manufactured by Wako Pure Chemical Industries, Ltd.) as the catalyst. The mixture was allowed to react at 80°C until reaching the theoretical NCO%, thereby producing an isocyanate group-terminated prepolymer ($A_0$). The isocyanate group-terminated prepolymer ($A_0$) had an isocyanate group concentration of 14.6%.
Then, a stainless steel vessel was charged with 100 parts by mass of the isocyanate group-terminated prepolymer ($A_0$), 0.02 parts by mass of dibutyltin(IV) dilaurate (manufactured by Wako Pure Chemical Industries, Ltd.) as the catalyst, and 0.02 parts by mass of antifoaming agent (manufactured by BYK Japan KK, trade name: BYK-088) relative to 486.3 parts of an amorphous polytetramethylene ether glycol (manufactured by Asahi Kasei Fibers Corporation, trade name: PTXG-1800) with its temperature adjusted to 80°C and 7.5 parts by mass of 1-octadecanol (manufactured by Wako Pure Chemical Industries, Ltd.) so that an equivalent ratio (NCO/hydroxyl group) of the isocyanate group relative to the hydroxyl group was 0.63, and the mixture was mixed while stirring at 700 rpm for 1 minute using Three-One Motor (manufactured by SHINTO Scientific Co., ltd., trade name: HEIDOM FBL 3000). A reduced-pressure defoaming was immediately performed to remove the bubbles in the mixture liquid, and then the mixture liquid was poured into a sheet mold having a thickness of 2 mm, a block mold having a thickness of 15 mm, and a button mold having a thickness of 12.5 mm and a diameter of 29 mm to which a mold release agent (manufactured by Miyoshi Oil & Fat Co., Ltd., trade name: MIRAX RS-102) was applied in advance and whose temperatures were adjusted to 80°C, with care not to include bubbles, and reaction was performed at 80°C for 2 hours, thereby producing polyurethane resin (Z). Thereafter, the produced polyurethane resin (Z) was removed from the mold, and allowed to stand in a room having a temperature of 23°C and a relative humidity of 55% for 7 days.

Example 44 (Production of polyurethane resin (AA)) (Reference Example)

498.5 parts by mass of polypropylene glycol (manufactured by Mitsui Chemicals, Inc., trade name: SHP-3900) and 268.4 parts by mass of propyleneoxide adduct monol (manufactured by Mitsui Chemicals, Inc., trade name: EH-56) with their temperature adjusted to 80°C were prepared, and 100 parts by mass of the polyurethane resin material (A) obtained in Example 1 was blended so that the equivalent ratio (NCO/hydroxyl group) of the isocyanate group relative to the hydroxyl group was 1.0.

Furthermore, 0.2 parts by mass of dibutyltin(IV) dilaurate (manufactured by Wako Pure Chemical Industries, Ltd.) as the catalyst, and 0.02 parts by mass of an antifoaming agent (manufactured by BYK Japan KK, trade name: BYK-088) were further added, and the mixture was mixed while stirring at 700 rpm using Three-One Motor (manufactured by SHINTO Scientific Co., ltd., trade name: HEIDOM FBL 3000) for 1 minute.

A reduced-pressure defoaming was immediately performed to remove the bubbles in the mixture liquid, and then the mixture liquid was poured into a sheet mold having a thickness of 2 mm, a block mold having a thickness of 15 mm, and a button mold having a thickness of 12.5 mm and a diameter of 29 mm to which a mold release agent (manufactured by Miyoshi Oil & Fat Co., Ltd., trade name: MIRAX RS-102) was applied in advance and whose temperatures were adjusted to 80°C, with care not to include bubbles, and reaction was performed at 80°C for 10 hours, thereby producing polyurethane resin (AA). Thereafter, the produced polyurethane resin (AA) was removed from the mold, and allowed to stand in a room having a temperature of 23 °C and a relative humidity of 55% for 7 days.

Example 45 (Production of polyurethane resin (AB)) (Reference Example)

100 parts by mass of the polyurethane resin material (A) obtained in Example 1 was blended relative to 191.1 parts by mass of ethylene oxide/propyleneoxide copolymer polyol (manufactured by Mitsui Chemicals, Inc., trade name: EP-505S) and 141.2 parts by mass of methoxypolyethylene glycol (manufactured by Mitsui Chemicals, Inc., trade name: UNIOXM-550) with its temperature adjusted to 80°C so that the equivalent ratio (NCO/hydroxyl group) of the isocyanate group relative to the hydroxyl group was 1.0.

Furthermore, 0.05 parts by mass of dibutyltin(IV) dilaurate (manufactured by Wako Pure Chemical Industries, Ltd.) as the catalyst and 0.02 parts by mass of an antifoaming agent (manufactured by BYK Japan KK, trade name: BYK-088) were added, and the mixture was mixed while stirring at 700 rpm using Three-One Motor (manufactured by SHINTO Scientific Co., ltd., trade name: HEIDOM FBL 3000) for 1 minute.

A reduced-pressure defoaming was immediately performed to remove the bubbles in the mixture liquid, and then the mixture liquid was poured into a sheet mold having a thickness of 2 mm, a block mold having a thickness of 15 mm, and a button mold having a thickness of 12.5 mm and a diameter of 29 mm to which a mold release agent (manufactured by Miyoshi Oil & Fat Co., Ltd., trade name: MIRAX RS-102) was applied in advance and whose temperatures were adjusted to 80°C, with care not to include bubbles, and reaction was performed at 80°C for 2 hours, thereby producing polyurethane resin (AB). Thereafter, the produced polyurethane resin (AB) was removed from the mold, and allowed to stand in a room having a temperature of 23 °C and a relative humidity of 55% for 7 days.

Comparative Example 9 (Production of polyurethane resin (AC))

A polyurethane resin (AC) was produced in the same manner as in Example 44, except that 617.6 parts by mass of polypropylene glycol (manufactured by Mitsui Chemicals, Inc., trade name: SHP-3900), 332.5 parts by mass of propyleneoxide adduct monol (manufactured by Mitsui Chemicals, Inc., trade name: EH-56), and 100 parts by mass of the polyurethane resin material (T) obtained in Comparative Example 1 instead of the polyurethane resin material (A) were used.

Example 46 (Production of polyurethane resin (AD)) (Reference Example)

The polyurethane resin material (A) obtained in Example 1 was blended with the acrylic polyol (B) obtained in Synthesis Example 2 so that the equivalent ratio (NCO/OH) of the isocyanate group in the polyurethane resin material relative to the hydroxyl group in the polyol was 1.0, and butyl acetate was further added so that the mixture liquid had a viscosity of 30 to 50mPa·s. Thereafter, the mixture was stirred at 23°C for 90 seconds. Then, the mixture liquid was applied onto a standard test plate in conformity with JIS G 3313, and thereafter cured at 140°C for 30 minutes, thereby producing a polyurethane resin (AD) having a thickness of about 35 μm.

The produced polyurethane resin (AD) was allowed to stand in a room with a temperature of 23°C and a relative humidity of 55% for 7 days.

Polyurethane resin (AD) had a Martens hardness of 82, the evaluation for self-repairing 1 was Good, had a gloss retention of 98%, and the evaluation for chemical resistance properties was Good.

Physical property evaluation

The polyurethane resin produced in Examples and Comparative Examples were evaluated in the following method. The results are shown in Tables 3 to 5.

<Martens hardness (unit: N/mm$^2$)>

The Martens hardness (HMs) of the coating that was in contact with the test plate was measured using a dynamic ultra micro hardness tester.

Testing Device: DUH-211 (manufactured by Shimadzu Corporation)
Indenter type: Triangular 115
Testing mode: load-unload test
Testing conditions: testing force: 10.00mN, load rate: 3.0mN/sec, load retention time: 10sec

<Self-repairing properties 1>

The gloss of the coating that was in contact with the test plate was measured using a glossmeter (Testing device: VG 2000, manufactured by Nippon Denshoku Industries Co., Ltd.) at 60° and defined as an initial value. Then, 100 g load was applied using a brass brush (YB-05, manufactured by Kanpe Hapio Co., Ltd.), and the coating was damaged by allowing the brush to go back and forth for 30 times. Then, the coating was allowed to stand in a constant temperature bath of 60°C for 1 hour. Thereafter, the gloss was measured and gloss retention was calculated from the initial value, and evaluation was conducted based on the following criteria.

(Evaluation criteria)

100%: Excellent
95 to 99%: Good
90 to 94%: Average
Less than 90 %: Bad

<Chemical resistance properties>

200 μL of 10% aqueous solution of sulfuric acid was dropped on the coating that was in contact with the test plate, and allowed to stand in a constant temperature bath of 80°C for 30 minutes. Thereafter, the dropped solution was wiped out, and the appearance was evaluated based on the following criteria.

No dropping marks can be found: Excellent
Slight dropping marks can be seen: Good
Some dropping marks can be seen: Average
Dropping marks can be seen: Bad

<Hardness (unit: C)>

Type C hardness test was conducted in conformity with JIS K7312 using the produced polyurethane resin by using a block mold.

<Appearance>

Appearance of the polyurethane resin was visually checked.

<Breaking Strength (unit: kPa)>

The polyurethane resin obtained by using a sheet mold was punched out with a dumbbell of JIS-3. Then, a tensile test was conducted using a tensile tester (manufactured by A & D Company, Limited, Model: RTG-1310) with the following conditions: under an atmosphere of 23°C and a relative humidity of 55%, a tensile speed of 500 mm/min, and a distance between the chucks of 20 mm. Breaking Strength was measured in this manner.

<Elongation at Break (unit: %)>

The tensile test was conducted in the same manner as in Breaking strength, thereby measuring elongation at break.

<Tear Strength (unit: kN/m)>

The polyurethane resin obtained by using a sheet mold was punched out with a dumbbell of JIS-B. Then, a tensile test was conducted under the same conditions as in the measurement of breaking strength to measure a tear strength.

<Self-repairing properties 2 (unit: %)>

A compression set was measured using the polyurethane resin obtained by using a button mold in conformity with JIS K6262 with the following conditions: under an atmosphere of measurement temperatures of 23°C and 70°C, and a relative humidity of 55%, compression proportion of 25%, and a holding time of 22 hours. The self-repairing 2 was calculated based on the following formula.

$$\text{Self-repairing } 2 = 100 - \text{compression set}$$

<Tackiness>

The polyurethane resin obtained by using a sheet mold was cut out to a square of 5cm. The obtained polyurethane resin pieces were arranged on a PP plate, and allowed to stand for one day in a room having a temperature of 23°C and a relative humidity of 55%. Then, the PP plate was reversed upside down, and occurrence/nonoccurrence of fallout of the polyurethane resin pieces within 1 min was observed.

Good: Fell off within 1 minute.
Bad: Did not fall off within 1 minute.

The abbreviations in Tables are shown below.

PDI: pentamethylenediisocyanate
HDI: hexamethylenediisocyanate
1,3-BG: 1,3-butanediol
PCD 500: polycarbonatediol, trade name ETERNACOLL UH-50, manufactured by Ube Industries, Ltd., functionality 2, number average molecular weight 500
PCD 1000: polycarbonatediol, trade name ETERNACOLL UH-100, manufactured by Ube Industries, Ltd., functionality 2, number average molecular weight 1000
PCD 2000: polycarbonatediol, trade name ETERNACOLL UH-200, manufactured by Ube Industries, Ltd., functionality 2, number average molecular weight 2000
PTMEG 250: polytetramethylene ether glycol, trade name TERATHANE 250, manufactured by Invista, functionality 2, number average molecular weight 250
PTMEG 650: polytetramethylene ether glycol, trade name TERATHANE 650, manufactured by Invista, functionality 2, number average molecular weight 650
PCL 303: polycaprolactonetriol, trade name PLACCEL 303, manufactured by Daicel Corporation., functionality 3, number average molecular weight 300
CAPA 3022: polycaprolactone polyol, trade name CAPA 3022, manufactured by Solvay, number average molecular weight 240 until a predetermined reaction rate (20% (also applies below)) was reached. The reaction rate reached a predetermined reaction rate after about 40 minutes, and therefore 0.15 parts by mass of o-toluenesulfonamide was added (isocyanate group conversion rate: 20 mass%). The obtained reaction solution was allowed to pass through a thin film distillation apparatus (degree of vacuum 0.093KPa, temperature 150°C) to remove unreacted PDI, and 0.02 parts by mass of o-toluenesulfonamide was further added relative to 100 parts by mass of the obtained product, thereby producing a polyurethane resin material (A).

While the illustrative embodiments of the present invention are provided in the above description, such is for illustrative purpose only and it is not to be construed as limiting in any manner. Modification and variation of the present invention that will be obvious to those skilled in the art is to be covered by the following claims.

Industrial Applicability

The self-repairing polyurethane resin material and the production method thereof of the present invention are suitably used in production of a self-repairing polyurethane resin.

The self-repairing polyurethane resin, the production method thereof, the self-repairing coating material, and the self-repairing elastomer material of the present invention are suitably used in various industrial fields: coating used in various industrial products, industrial model resin, vehicle fields, mold resin fields, medical fields, optical fields, and robot fields.

## Claims

**1.** A self-repairing polyurethane resin material used for producing polyurethane resin having self-repairing properties,

wherein the self-repairing polyurethane resin material has an isocyanate group at its molecular terminal,
the self-repairing polyurethane resin material is produced by reaction of pentamethylenediisocyanate and an active hydrogen group-containing compound, and
the active hydrogen group-containing compound contains a polyol compound having a number average molecular weight of 100 to 2000 and an average functionality of 2 to 3,
the polyol compound includes a carbonate group and/or an ester group, and
the polyol compound contains a bifunctional polyol compound and a trifunctional polyol compound, wherein the number average molecular weight and the average functionality are determined according to the methods identified in the specification.

**2.** The self-repairing polyurethane resin material according to Claim 1,
wherein the active hydrogen group-containing compound contains 50 mass% or more of a polyol compound having a number average molecular weight of 250 to 1000 and an average functionality of 2 to 3 relative to a total amount of the active hydrogen group-containing compound, wherein the number average molecular weight and the average functionality are determined according to the methods identified in the specification.

**3.** The self-repairing polyurethane resin material according to Claim 1, wherein the mole ratio of the bifunctional polyol compound relative to the trifunctional polyol compound is 1 to 50.

**4.** The self-repairing polyurethane resin material according to Claim 1, wherein the average functionality of the isocyanate group, as determined according to the method identified in the specification, is 3.5 to 6.

**5.** The self-repairing polyurethane resin material according to Claim 1, wherein an allophanate group and an isocyanate trimer are contained, and
the mole ratio of the allophanate group relative to the isocyanate trimer, as determined according to the method identified in the specification, is 0.1 to 20.

**6.** The self-repairing polyurethane resin material according to Claim 1, wherein an isocyanate trimer is contained, and the isocyanate trimer content relative to a total amount of the self-repairing polyurethane resin material is 3 to 50 mass%.

**7.** The self-repairing polyurethane resin material according to Claim 1, wherein a ratio of a peak area for the number average molecular weight of 1000 or more relative to a total peak area measured by gel permeation chromatography (GPC) is 25 to 80 mass%.

**8.** A self-repairing polyurethane resin produced by allowing the self-repairing polyurethane resin material according to Claim 1 to react with an active hydrogen group-containing compound.

**9.** A self-repairing coating material made of the self-repairing polyurethane resin according to Claim 8.

**10.** A self-repairing elastomer material made of the self-repairing polyurethane resin according to Claim 8.

**11.** A method for producing a self-repairing polyurethane resin material,
wherein the self-repairing polyurethane resin material has an isocyanate group at its molecular terminal, and

pentamethylenediisocyanate is allowed to react with an active hydrogen group-containing compound containing a polyol compound including a carbonate group and/or an ester group and having a number average molecular weight of 100 to 2000 and an average functionality of 2 to 3, and the polyol compound contains a bifunctional polyol compound and a trifunctional polyol compound, wherein the number average molecular weight and the average functionality are determined according to the methods identified in the specification.

**12.** A method for producing a self-repairing polyurethane resin, wherein the self-repairing polyurethane resin material according to Claim 1 is allowed to react with an active hydrogen group-containing compound.

## Patentansprüche

**1.** Selbstreparierendes Polyurethanharzmaterial, welches zur Herstellung von Polyurethanharz mit selbstreparierenden Eigenschaften verwendet wird,

wobei das selbstreparierende Polyurethanharzmaterial an seinem molekularen Ende eine Isocyanatgruppe aufweist,
das selbstreparierende Polyurethanharzmaterial durch Reaktion von Pentamethylendiisocyanat und einer aktiven wasserstoffgruppenhaltigen Verbindung hergestellt wird, und
die aktive wasserstoffgruppenhaltige Verbindung eine Polyolverbindung mit einem zahlenmittleren Molekulargewicht von 100 bis 2000 und einer mittleren Funktionalität von 2 bis 3 enthält,
die Polyolverbindung eine Carbonatgruppe und/oder eine Estergruppe beinhaltet, und
die Polyolverbindung eine bifunktionelle Polyolverbindung und eine trifunktionelle Polyolverbindung enthält, wobei
das zahlenmittlere Molekulargewicht und die mittlere Funktionalität gemäß den in der Beschreibung angegebenen Methoden bestimmt werden.

**2.** Selbstreparierendes Polyurethanharzmaterial gemäß Anspruch 1,
wobei die aktive wasserstoffgruppenhaltige Verbindung 50 Massenprozent oder mehr der Polyolverbindung mit einem zahlenmittleren Molekulargewicht von 250 bis 1000 und einer mittleren Funktionalität von 2 bis 3, bezogen auf die Gesamtmenge der aktiven wasserstoffgruppenhaltigen Verbindung, enthält, wobei das zahlenmittlere Molekulargewicht und die mittlere Funktionalität gemäß den in der Beschreibung angegebenen Methoden bestimmt werden.

**3.** Selbstreparierendes Polyurethanharzmaterial gemäß Anspruch 1, wobei das Molverhältnis der bifunktionellen Polyolverbindung, bezogen auf die trifunktionelle Polyolverbindung, 1 bis 50 beträgt.

**4.** Selbstreparierendes Polyurethanharzmaterial gemäß Anspruch 1, wobei die mittlere Funktionalität der Isocyanatgruppe, bestimmt gemäß der in der Beschreibung angegebenen Methode, 3,5 bis 6 beträgt.

**5.** Selbstreparierendes Polyurethanharzmaterial gemäß Anspruch 1, wobei eine Allophanatgruppe und ein Isocyanattrimer enthalten sind, und
das Molverhältnis der Allophanatgruppe, bezogen auf das Isocyanattrimer, bestimmt gemäß der in der Beschreibung angegebenen Methode, 0,1 bis 20 beträgt.

**6.** Selbstreparierendes Polyurethanharzmaterial gemäß Anspruch 1, wobei ein Isocyanattrimer enthalten ist, und
der Isocyanattrimergehalt, bezogen auf die Gesamtmasse des selbstreparierenden Polyurethanharzmaterials, 3 bis 50 Massenprozent beträgt.

**7.** Selbstreparierendes Polyurethanharzmaterial gemäß Anspruch 1, wobei das Verhältnis der Peakfläche für das zahlenmittlere Molekulargewicht von 1000 oder mehr, bezogen auf die Gesamtpeakfläche, bestimmt mittels Gelpermeationschromatographie (GPC), 25 bis 80 Massenprozent beträgt.

**8.** Selbstreparierendes Polyurethanharz, hergestellt indem das selbstreparierende Polyurethanharzmaterial gemäß Anspruch 1 mit einer aktiven wasserstoffgruppenhaltigen Verbindung reagiert.

**9.** Selbstreparierendes Beschichtungsmaterial, hergestellt aus dem selbstreparierenden Polyurethanharz gemäß Anspruch 8.

10. Selbstreparierendes Elastomermaterial, hergestellt aus dem selbstreparierenden Polyurethanharz gemäß Anspruch 8.

11. Verfahren zur Herstellung eines selbstreparierenden Polyurethanharzmaterials,

wobei das selbstreparierende Polyurethanharzmaterial an seinem molekularen Ende eine Isocyanatgruppe aufweist, und
Pentamethylendiisocyanat mit einer aktiven wasserstoffgruppenhaltigen Verbindung zur Reaktion gebracht wird, welche eine Polyolverbindung enthält, die eine Carbonatgruppe und/oder eine Estergruppe umfasst und ein zahlenmittleres Molekulargewicht von 100 bis 2000 sowie eine mittlere Funktionalität von 2 bis 3 aufweist, und die Polyolverbindung eine bifunktionelle Polyolverbindung und eine trifunktionelle Polyolverbindung enthält, wobei das zahlenmittlere Molekulargewicht und die mittlere Funktionalität gemäß den in der Beschreibung angegebenen Methoden bestimmt werden.

12. Verfahren zur Herstellung eines selbstreparierenden Polyurethanharzes, wobei das selbstreparierende Polyurethanharzmaterial gemäß Anspruch 1 mit einer aktiven wasserstoffgruppenhaltigen Verbindung zur Reaktion gebracht wird.

## Revendications

1. Matériau de résine polyuréthane auto-réparateur utilisé pour la production de résine polyuréthane ayant des propriétés auto-réparatrices,

dans lequel le matériau de résine polyuréthane auto-réparateur a un groupe isocyanate à son extrémité moléculaire,
le matériau de résine polyuréthane auto-réparateur est produit par réaction de pentaméthylène diisocyanate et d'un composé contenant un groupe hydrogène actif, et
le composé contenant un groupe hydrogène actif contient un composé polyol ayant un poids moléculaire moyen en nombre de 100 à 2000 et une fonctionnalité moyenne de 2 à 3,
le composé polyol comporte un groupe carbonate et/ou un groupe ester, et
le composé polyol contient un composé polyol bifonctionnel et un composé polyol trifonctionnel, dans lequel le poids moléculaire moyen en nombre et la fonctionnalité moyenne sont déterminés selon les méthodes identifiées dans la spécification.

2. Le matériau de résine polyuréthane auto-réparateur selon la revendication 1,
dans lequel le composé contenant un groupe hydrogène actif contient 50 % en masse ou plus d'un composé polyol ayant un poids moléculaire moyen en nombre de 250 à 1000 et une fonctionnalité moyenne de 2 à 3 par rapport à une quantité totale du composé contenant un groupe hydrogène actif, dans lequel le poids moléculaire moyen en nombre et la fonctionnalité moyenne sont déterminés selon les méthodes identifiées dans la spécification.

3. Le matériau de résine polyuréthane auto-réparateur selon la revendication 1, dans lequel le rapport molaire du composé polyol bifonctionnel par rapport au composé polyol trifonctionnel est de 1 à 50.

4. Le matériau de résine polyuréthane auto-réparateur selon la revendication 1, dans lequel la fonctionnalité moyenne du groupe isocyanate, telle que déterminée selon la méthode identifiée dans la spécification, est de 3,5 à 6.

5. Le matériau de résine polyuréthane auto-réparateur selon la revendication 1, dans lequel un groupe allophanate et un trimère d'isocyanate sont contenus, et
le rapport molaire du groupe allophanate par rapport au trimère d'isocyanate, tel que déterminée selon la méthode identifiée dans la spécification, est de 0,1 à 20.

6. Le matériau de résine polyuréthane auto-réparateur selon la revendication 1, dans lequel un trimère isocyanate est contenu, et
la teneur de trimère d'isocyanate par rapport à une quantité totale du matériau de résine polyuréthane auto-réparateur est de 3 à 50 % en masse.

7. Le matériau de résine polyuréthane auto-réparateur selon la revendication 1, dans lequel un rapport d'une aire de pic pour le poids moléculaire moyen en nombre de 1000 ou plus par rapport à une aire de pic totale mesurée par chromatographie à perméation de gel (GPC) est de 25 à 80 % en masse.

**8.** Résine polyuréthane auto-réparatrice produite en laissant le matériau de résine polyuréthane auto-réparateur selon la revendication 1 réagir avec un composé contenant un groupe hydrogène actif.

**9.** Matériau de revêtement auto-réparateur fait de la résine polyuréthane auto-réparatrice selon la revendication 8.

**10.** Matériau élastomère auto-réparateur fait de la résine polyuréthane auto-réparatrice selon la revendication 8.

**11.** Procédé de production d'un matériau de résine polyuréthane auto-réparateur,

dans lequel le matériau de résine polyuréthane auto-réparateur a un groupe isocyanate à son extrémité moléculaire, et

du pentaméthylène diisocyanate est mis en réaction avec un composé contenant un groupe hydrogène actif comportant un groupe carbonate et/ou un groupe ester et ayant un poids moléculaire moyen en nombre de 100 à 2000 et une fonctionnalité moyenne de 2 à 3, et le composé polyol contient un composé polyol bifonctionnel et un composé polyol trifonctionnel, dans lequel le poids moléculaire moyen en nombre et la fonctionnalité moyenne sont déterminés selon les méthodes identifiées dans la spécification.

**12.** Procédé de production d'une résine polyuréthane auto-réparatrice, dans lequel le matériau de résine polyuréthane auto-réparateur selon la revendication 1 est mis en réaction avec un composé contenant un groupe hydrogène actif.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5270446 B
- JP 2012107101 A
- JP SHO61129173 A
- WO 2012121291 A